# EUROPEAN PATENT APPLICATION

(11) **EP 4 738 903 A1**
(43) Date of publication of application: **06.05.2026**
(21) Application number: 23942821.2
(22) Date of filing: 28.06.2023
(51) Int. Cl.: H04W 12/03, H04W 12/106

(54) **COMMUNICATION METHOD AND DEVICES**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); YOU, Xin, Dongguan, Guangdong 523860 (CN); LIN, Xue, Dongguan, Guangdong 523860 (CN)
(74) Representative: RGTH
(86) International application number: PCT/CN2023/103494
(87) International publication number: WO 2025/000304

(57) **Abstract**

The present application relates to a communication method, and devices, a computer-readable storage medium, a computer program product and a computer program. The method comprises: a first device receiving a first media access control (MAC) protocol data unit (PDU) from a second device, wherein the first MAC PDU carries a first message check code, and the first message check code is calculated by the second device on the basis of one or more first loads of the first MAC PDU.

## Description

### TECHNICAL FIELD

The present disclosure relates to the field of communication, and in particular, to communication methods, devices, a computer-readable storage medium, a computer program product, and a computer program.

### BACKGROUND

In the related art, security mechanisms are mainly provided at the packet data convergence protocol (PDCP) layer. However, protocol layers below the PDCP layer, such as the media access control (MAC) layer, lack security protection mechanisms for the transmitted control signaling and data, which may lead to security issues such as privacy leakage in messages transmitted at the MAC layer, thereby affecting service quality. Therefore, how to ensure the security of MAC layer messages becomes a problem that needs to be solved.

### SUMMARY

Embodiments of the present disclosure provide communication methods, devices, a computer-readable storage medium, a computer program product, and a computer program.

The embodiments of the present disclosure provide a communication method, including:
receiving, by a first device, a first media access control (MAC) protocol data unit (PDU) from a second device, where the first MAC PDU carries a first message check code, and the first message check code is calculated by the second device based on one or more first payloads of the first MAC PDU.

The embodiments of the present disclosure provide a communication method, including:
transmitting, by a second device, a first MAC PDU to a first device, where the first MAC PDU carries a first message check code, and the first message check code is calculated based on one or more first payloads of the first MAC PDU.

The embodiments of the present disclosure provide a first device, including:
a first communication unit used to receive a first media access control (MAC) protocol data unit (PDU) from a second device, where the first MAC PDU carries a first message check code, and the first message check code is calculated by the second device based on one or more first payloads of the first MAC PDU.

The embodiments of the present disclosure provide a second device, including:
a second communication unit used to transmit a first media access control (MAC) protocol data unit (PDU) to a first device, where the first MAC PDU carries a first message check code, and the first message check code is calculated based on one or more first payloads of the first MAC PDU.

The embodiments of the present disclosure provide a first device, including a processor and a memory communicating with the processor. The memory is used to store instructions. When the instructions are executed by the processor, the instructions cause the first device to perform the above method.

The embodiments of the present disclosure provide a second device, including a processor and a memory communicating with the processor. The memory is used to store instructions. When the instructions are executed by the processor, the instructions cause the second device to perform the above method.

The embodiments of the present disclosure provide a chip for implementing the above method.

Specifically, the chip includes: a processor used to call and run a computer program from a memory, to cause a device equipped with the chip to perform the above method.

The embodiments of the present disclosure provide a computer-readable storage medium used to store a computer program which, when executed by a device, causes the device to perform the above method.

The embodiments of the present disclosure provide a computer program product, including computer program instructions. The computer program instructions cause a computer to perform the above method.

The embodiments of the present disclosure provide a computer program which, when executed by a computer, causes the computer to perform the above method.

By adopting the solution provided in the embodiments, the message check code can be carried in the MAC PDU, and the message check code is calculated based on the payload(s) in the MAC PDU. In this way, a security protection mechanism will be introduced in the MAC layer to avoid security issues such as message leakage, making messages transmitted at the MAC layer more secure.

### BRIEF DESCRIPTION OF THE DRAWINGS

FIG. 1 is a schematic diagram of an application scenario according to embodiments of the present disclosure.
FIG. 2 is a schematic flowchart of a communication method according to an embodiment of the present disclosure.
FIG. 3 is a schematic flowchart of a communication method according to another embodiment of the present disclosure.
FIGS. 4 to 9 are schematic diagrams of various formats of MAC PDU in a communication method according to an embodiment of the present disclosure.
FIG. 10 is a schematic block diagram of a first device according to an embodiment of the present disclosure.
FIG. 11 is a schematic block diagram of a second device according to an embodiment of the present disclosure.
FIG. 12 is a schematic block diagram of a communication device according to embodiments of the present disclosure.
FIG. 13 is a schematic block diagram of a chip according to embodiments of the present disclosure.
FIG. 14 is a schematic block diagram of a communication system according to embodiments of the present disclosure.

### DETAILED DESCRIPTION

Technical solutions of embodiments of the present disclosure can be applied to various communication systems, such as long term evolution (LTE), advanced long term evolution (LTE-A), new radio (NR), NR evolution, wireless local area network (WLAN), wireless fidelity (WiFi), or other communication systems.

The embodiments of the present disclosure describe various embodiments in conjunction with a network device and a terminal. The terminal may be mobile or fixed, and may also be referred to as a mobile station, a user unit, etc. The terminal may be a station in a WLAN, and may be a smart terminal, a wireless modem, a notebook computer, a tablet computer, or other terminals. In the embodiments of the present disclosure, the terminal may be a virtual reality (VR) terminal/augmented reality (AR) terminal, a terminal in industrial control, a terminal in self driving, a terminal in remote medical, a terminal in smart grid, a terminal in transportation safety, a terminal in smart city, or a wireless terminal in smart home, etc. As an example but not limitation, in the embodiments of the present disclosure, the terminal may be a wearable device.

In the embodiments of the present disclosure, the network device may be a device for communicating with a terminal. The network device may be an access point in a WLAN, an evolved base station in an LTE, or a relay station, or a vehicle-mounted device, a wearable device, and a network device (gNB) in an NR network, or a network device in a future evolved public land mobile network (PLMN) network, or a network device in a non-terrestrial network, etc. As an example but not limitation, in the embodiments of the present disclosure, the network device may have a mobile feature, for example, the network device may be a mobile device.

It should be understood that the terms "system" and "network" are often used interchangeably herein. Herein, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship. It should be understood that "indication" mentioned in the embodiments of the present disclosure may mean a direct indication, or an indirect indication, or may represent an association. For example, A indicates B, which may mean that A directly indicates B (for example, B may be obtained by A) or may mean that A indirectly indicates B (for example, A indicates C, and B may be obtained by C), or may mean that there is an association between A and B. In the description of the embodiments of the present disclosure, the term "corresponding" may mean that there is a direct correspondence or indirect correspondence between two, or an association between the two, or may mean a relationship of indicating and being indicated or a relationship of configuring and being configured, etc.

To facilitate understanding of the technical solutions of the embodiments of the present disclosure, the relevant technologies of the embodiments of the present disclosure are described below. The following related technologies can be arbitrarily combined with the technical solutions of the embodiments of the present disclosure as optional solutions, and they all belong to the protection scope of the embodiments of the present disclosure.

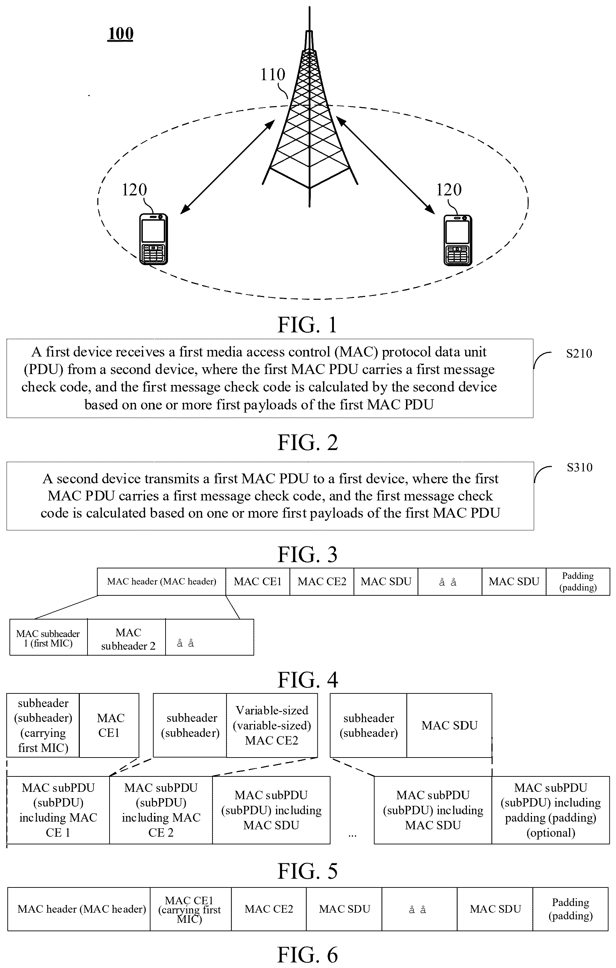

FIG. 1 exemplarily shows a communication system 100. The communication system includes a network device 110 and two terminals 120. In a possible implementation manner, the communication system 100 may include a plurality of network devices 110, and there may be another quantity of terminals 120 within a coverage of each network device 110, which will not be limited in the embodiments of the present disclosure. In a possible implementation manner, the communication system 100 may further include a mobility management entity, an access and mobility management function, and other network entities, which will not be limited in the embodiments of the present disclosure. The network device may further include an access network device and a core network device. That is, the communication system may further include a plurality of core networks for communicating with access network devices. The access network device may be a base station in an LTE, LTE-A, or NR system. Considering the communication system shown in FIG. 1 as an example, communication devices may include network devices and terminals with communication functions, and the communication devices may further include other devices in the communication system, such as a network controller, a mobile management entity and other network entities, which will not be limited in the embodiments of the present disclosure.

FIG. 2 is a schematic flowchart of a communication method according to an embodiment of the present disclosure. The method includes at least part of the following content.

In S210, a first device receives a first media access control (MAC) protocol data unit (PDU) from a second device, where the first MAC PDU carries a first message check code, and the first message check code is calculated by the second device based on one or more first payloads of the first MAC PDU.

FIG. 3 is a schematic flowchart of a communication method according to another embodiment of the present disclosure. The method includes at least part of the following content.

In S310, a second device transmits a first MAC PDU to a first device, where the first MAC PDU carries a first message check code, and the first message check code is calculated based on one or more first payloads of the first MAC PDU.

The first device is a first terminal, and the second device is one of a network device and a second terminal. Alternatively, the first device is a network device, and the second device is a second terminal. Here, the network device may be one of an access network device and a core network device. In a preferred embodiment, the network device may be an access network device.

The first MAC PDU may be any MAC PDU transmitted by the second device to the first device.

For example, the first device is a first terminal, and the second device is an access network device. In this case, the first MAC PDU may be any downlink MAC PDU.

For example, the first device is a first terminal, and the second device is a second terminal. In this case, the first MAC PDU may be any sidelink MAC PDU.

For example, the first device may be an access network device, and the second device may be a second terminal. In this case, the first MAC PDU may be any uplink MAC PDU.

The one or more first payloads may be one or more payloads used to calculate the first message check code among all payloads of the first MAC PDU. A quantity of all payloads of the first MAC PDU is not limited in this embodiment. Each first payload in the one or more first payloads is in one of the following types: a MAC service data unit (SDU), and a MAC control element (CE). It should be understood that the type of the first payload being the MAC SDU or the MAC CE is only an exemplary illustration. In some possible examples, the type of the first payload may also include a MAC random access response (RAR). All possible types of the first payload are not described in detail here. In addition, the types of different first payloads may be the same or different. For example, the types of the first payloads may all be MAC CE. This embodiment does not limit whether the types of all the first payloads are the same.

In some possible implementation manners, the first MAC PDU includes a first MAC subheader, the first MAC subheader carries the first message check code, and the first MAC subheader is one of one or more MAC subheaders of the first MAC PDU.

The above-mentioned message check code is used for integrity checking or integrity authentication. For example, the message check code may include: a message integrity code (MIC) or message authentication code (MAC). It should be noted that, in order to facilitate the distinction from the MAC layer, the MIC is used to represent the message check code in some examples below, and these examples are not intended to limit all possible types of the message check code.

The first MAC PDU may consist of one or more MAC subheaders and one or more payloads. Different MAC subheaders correspond to different payloads, and any one MAC subheader may have a corresponding relationship with one or more payloads. For example, in the first MAC PDU, MAC subheader 1 may have a corresponding relationship with payload 1, and MAC subheader 2 may have a corresponding relationship with payload 2, which will not be described in detail. For another example, MAC subheader 1 may correspond to payload 1 and payload 2, and MAC subheader 2 may correspond to payload 3, which will not be described in detail. The manner of determining or configuring the corresponding relationship between each MAC subheader and each payload is not limited in this embodiment.

In a possible example, in the first MAC PDU, the one or more MAC subheaders may constitute a MAC header, and the MAC header is located at the beginning of the MAC PDU; the one or more payloads are located after the MAC header; and the type of any payload may be any one of: MAC CE, MAC SDU, and Padding. For example, referring to a format of the first MAC PDU shown in FIG. 4, in FIG. 4, the MAC header of the first MAC PDU is located in front of the MAC payload. The MAC CE1, MAC CE2, and multiple MAC SDUs shown in FIG. 4 are payloads included in the MAC payload. In addition, the MAC payload also includes padding. This embodiment does not limit or describe the padding part. FIG. 4 provides an illustration that the MAC header may include one or more MAC subheaders. For example, the MAC header in FIG. 4 further includes MAC subheader 1, MAC subheader 2, etc., where MAC subheader 1 may correspond to MAC CE1, and MAC subheader 2 may correspond to MAC CE2.

In a possible example, the first MAC PDU may include one or more MAC subPDUs. Any MAC subPDU among the one or more MAC subPDUs may include a MAC subheader and one or more payloads. Alternatively, any MAC subPDU may only include one or more payloads and not include a MAC subheader; for example, a MAC subPDU including padding may not carry a MAC subheader. The type of any payload in this embodiment is the same as that in the above example, and it may be any one of MAC CE, MAC SDU, and Padding. For example, referring to another format of the first MAC PDU shown in FIG. 5, the first MAC PDU format in FIG. 5 is particularly applicable to uplink MAC PDU. Any MAC subPDU may consist of a MAC subheader and any one of a MAC SDU and a MAC CE. For example, the first MAC subPDU in FIG. 5 includes a MAC subheader and a corresponding MAC CE1. In addition, for the sake of simplicity, FIG. 5 does not illustrate the content that may be included in any MAC subheader. Any MAC subheader may also carry at least some information fields of R, L, F, and LCID. Each information field will not be described in detail here.

In some embodiments, the first MAC subheader is a MAC subheader corresponding to one or more first payloads, and the one or more first payloads are all payloads corresponding to the first MAC subheader.

Optionally, there is one first payload, and the one first payload is the only payload corresponding to the first MAC subheader. For example, a first message check code is calculated for payload 1 (i.e., a first payload) in the first MAC PDU, payload 1 corresponds to MAC subheader 1 in the first MAC PDU, and MAC subheader 1 is the first MAC subheader. That is, MAC subheader 1 carries the first message check code calculated based on payload 1.

For example, referring to FIG. 4 for exemplary description, a plurality of MAC subheaders are included in the MAC header, where MAC subheader 1 corresponds to MAC CE1, and MAC subheader 2 corresponds to MAC CE2. If a first MIC is calculated based on MAC CE1, that is, MAC CE1 is the one first payload mentioned above, the first MIC is carried in MAC subheader 1. For example, referring to FIG. 5, if a first MIC is calculated based on MAC CE1, that is, MAC CE1 is the one first payload mentioned above, the first MIC is carried in a subheader (i.e., the first MAC subheader) corresponding to MAC CE1.

Optionally, there are a plurality of first payloads, and the plurality of first payloads are all payloads corresponding to the first MAC subheader. For example, payload 1 and payload 2 in the first MAC PDU both correspond to MAC subheader 1 in the first MAC PDU, and the first message check code is calculated based on payload 1 and payload 2 (i.e., two first payloads). Therefore, MAC subheader 1 is the first MAC subheader, that is, MAC subheader 1 carries the first message check code calculated based on payload 1 and payload 2. For example, referring to FIG. 4 for exemplary description, a plurality of MAC subheaders are included in the MAC header, where MAC subheader 1 corresponds to MAC CE1 and MAC CE2; and if a first MIC is calculated based on MAC CE1 and MAC CE2, that is, MAC CE1 and MAC CE2 are the two first payloads, then the first MIC is carried in MAC subheader 1.

In this embodiment, the first MAC subheader may further carry first indication information, and the first indication information is used to indicate each first payload in the one or more first payloads. Alternatively, since the one or more first payloads are all payloads corresponding to the first MAC subheader, the first MAC subheader may not carry the first indication information. It should be understood that, in order to reduce overhead, in this embodiment, the first MAC subheader may not carry the first indication information.

In some embodiments, the first MAC subheader is a MAC subheader corresponding to one or more first payloads, and the one or more first payloads are part of all the payloads corresponding to the first MAC subheader.

Optionally, there is one first payload, and the one first payload is any one of a plurality of payloads corresponding to the first MAC subheader. For example, the first message check code is calculated for payload 1 (i.e., the first payload) in the first MAC PDU, and payload 1 corresponds to MAC subheader 1 in the first MAC PDU; therefore, MAC subheader 1 is the first MAC subheader, that is, MAC subheader 1 carries the first message check code calculated based on payload 1.

Optionally, there are a plurality of first payloads, and the plurality of first payloads are part of the plurality of payloads corresponding to the first MAC subheader. For example, payload 1 and payload 2 in the first MAC PDU both correspond to MAC subheader 1 in the first MAC PDU, and the first message check code is calculated based on payload 1 and payload 2 (i.e., two first payloads); therefore, MAC subheader 1 is the first MAC subheader, that is, MAC subheader 1 carries the first message check code calculated based on payload 1 and payload 2.

In this embodiment, since the one or more first payloads are part of all the payloads corresponding to the first MAC subheader, the first MAC subheader may further carry first indication information, and the first indication information is used to indicate each first payload of the one or more first payloads. The first indication information is used to indicate which payload or payloads are the first payloads for calculating the first message check code.

In an example, the first indication information may include an identifier of each first payload of the one or more first payloads. In another example, the first indication information may include a position corresponding to each first payload; for example, a position corresponding to any first payload may be an arrangement order of the first payload among all the payloads corresponding to the first MAC PDU; for another example, a position corresponding to any first payload may be an arrangement order of the first payload among all the payloads corresponding to the first MAC subheader. For example, if the first MAC subheader corresponds to 3 payloads, where payload 1 (located in a first arrangement order of all the payloads corresponding to the first MAC subheader, that is, payload 1 is the 1st payload) and payload 2 (located in a second arrangement order of all the payloads corresponding to the first MAC subheader, that is, payload 2 is the 2nd payload) are used to calculate the first message check code, then the first indication information may directly indicate the 1st payload and the 2nd payload. It should be understood that this is only an exemplary description of the first indication information, and any indicating manner that can uniquely determine each first payload can be within the protection scope of this embodiment, which will not be described in detail.

In some embodiments, the first MAC subheader may be a MAC subheader corresponding to at least part of the first payloads among the plurality of first payloads. In this embodiment, the plurality of first payloads may correspond to a plurality of MAC subheaders, so that any one of the plurality of MAC subheaders can be used as the first MAC subheader. It should be noted that this embodiment does not limit the quantity of first payloads and the quantity of corresponding MAC subheaders. Different first payloads may correspond to different MAC subheaders, or a part of first payloads may correspond to a same MAC subheader and a remaining part of first payloads may correspond to another same MAC subheader. All of these are within the protection scope of this embodiment, which will not be described in detail.

For example, payload 1 and payload 2 (that is, two first payloads) in the first MAC PDU are used to calculate the first message check code together; payload 1 corresponds to MAC subheader 1 in the first MAC PDU, and payload 2 corresponds to MAC subheader 2; MAC subheader 1 may be used as the first MAC subheader, and MAC subheader 1 carries the first message check code calculated based on both payload 1 and payload 2.

In this embodiment, since the first MAC subheader is one of the plurality of MAC subheaders corresponding to the plurality of first payloads, the first MAC subheader may further carry the first indication information to indicate which payload or payloads are the first payloads for calculating the first message check code. The relevant description of the specific content of the first indication information is the same as that in the above-mentioned embodiments, which will not be repeated.

In some embodiments, the first MAC subheader may be a designated MAC subheader among all the MAC subheaders of the first MAC PDU. This embodiment is not limited by the correspondence between the MAC subheader and the payload, but directly uses the designated MAC subheader to carry the first message check code. The designated MAC subheader may be a MAC subheader with a designated serial number, a designated sequence number, a designated position, or a designated arrangement order. The designated serial number, the designated sequence number, the designated position, or the designated arrangement order may be predefined, or preconfigured, etc., and the determining method is not limited here.

In this embodiment, since the correspondence between the MAC subheader and the payload is not considered, the first MAC subheader may further carry the first indication information to indicate which payload or payloads are the first payloads for calculating the first message check code. The relevant description of the specific content of the first indication information is the same as that in the embodiments, which will not be repeated.

In some possible embodiments, bits occupied by the first message check code in the first MAC subheader may be set according to actual conditions, for example, may be specified by the protocol or by default.

Specifically, the first message check code occupies one or more designated bits in a designated information field in the first MAC subheader. In some possible examples, the designated information field may be a reserved field, that is, the first message check code may occupy one or more designated bits of the reserved field in the first MAC subheader, and a length of the first message check code is equal to a quantity of the designated bits. In this embodiment, the length of the first message check code is not limited, as long as a total length of the reserved field is greater than the length of the first message check code, it is within the protection scope of this embodiment. It should be understood that this is only an exemplary description. In actual process, the designated information field may also be an L or F field, or other field. The designated bits may vary with different designated information fields, but the quantity of designated bits may remain unchanged. All possible scenarios are not described in detail here.

It should be pointed out that, in some possible cases, a MIC is not calculated for any payload in a MAC PDU transmission, and any MAC subheader may not carry a MIC. In this case, one or more designated bits in the designated information field in the MAC subheader may be set to zero, to indicate that the MIC is not currently carried or to indicate that integrity protection is not enabled. Alternatively, in this case, the MAC subheader may not carry one or more designated bits in the designated information field.

In some possible implementation manners, each first payload is used to carry plaintext data. Plaintext data carried by any first payload may be called the plaintext data corresponding to the first payload, or the plaintext data that the first payload should carry, or the plaintext data of the first payload. Alternatively, the plaintext data may be called raw data, that is, unencrypted data.

In some possible implementation manners, the first message check code may be carried by any one of the one or more first payloads.

Optionally, there is one first payload. That is, the first payload carries both the first message check code and the plaintext data. This embodiment does not limit the positional relationship between the first message check code and the plaintext data. For example, the first message check code may be located in front of the plaintext data, or may be located after the plaintext data, or may be located in the middle of the plaintext data, which are all within the protection scope of this embodiment. In this case, since there is only one first payload and the first payload directly carries the first message check code, the first indication information may not be carried.

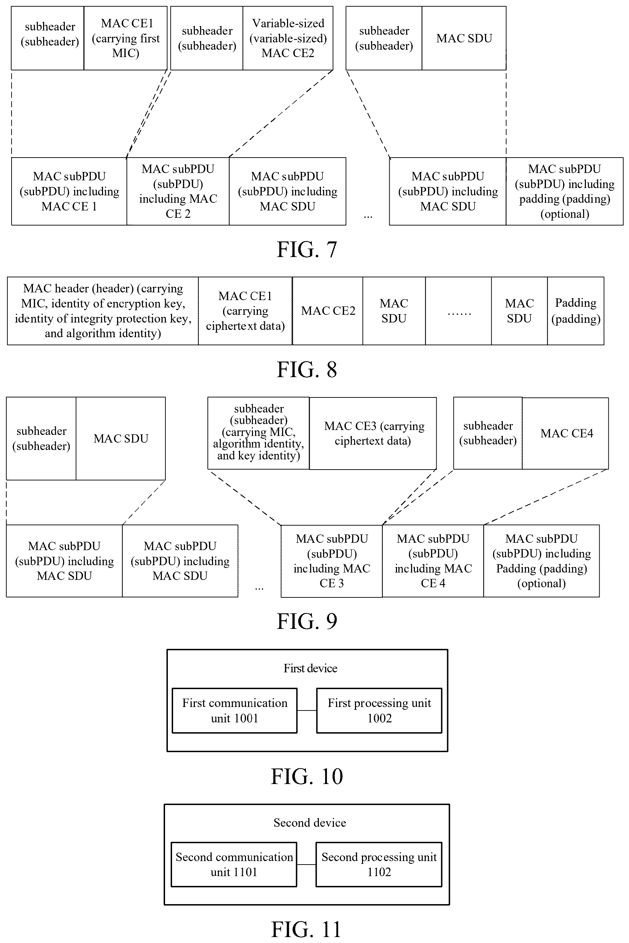

For example, plaintext data of payload 1 (i.e., one first payload) in the first MAC PDU is used to calculate the first message check code, and payload 1 carries the first message check code and carries the plaintext data. For example, referring to FIG. 6 for exemplary description, a first MIC is calculated based on MAC CE1, that is, MAC CE1 is the one first payload, and the first MIC is carried in MAC CE1. For example, referring to FIG. 7 for another exemplary description, if a first MIC is calculated based on MAC CE1, that is, MAC CE1 is the one first payload, then the first MIC is carried in MAC CE1.

Optionally, there are a plurality of first payloads, and any one of the plurality of first payloads may include the first message check code and include the plaintext data or the raw data. For example, payload 1 and payload 2 (i.e., two first payloads) in the first MAC PDU together calculate the first message check code, payload 1 carries the first message check code and carries the plaintext data of payload 1, and payload 2 keeps carrying its plaintext data unchanged.

In this case, since there are a plurality of first payloads, the first payload carrying the first message check code may also carry the first indication information to indicate which load or loads participate in calculating the first message check code. This embodiment does not limit the positional relationship between the first indication information, the first message check code and the plaintext data. For example, the first indication information may be at the front, followed by the first message check code, and in turn followed by the plaintext data; or the first indication information may be located at the beginning, the plaintext data is in the middle, and the first message check code is at the end. This is only an illustrative description and not a restrictive description of this embodiment.

In some possible embodiments, one or more message check codes may be carried in the first MAC PDU.

For example, the first MAC PDU may carry only one message check code, and the message check code is the first message check code. The first message integrity code may be carried by the first MAC subheader of the first MAC PDU. The specific carrying manner is the same as that in the above embodiments, which will not be repeated.

For another example, the first MAC PDU may carry a plurality of message check codes, and any one of the plurality of message check codes may be the first message check code. In this case, different message check codes are calculated based on different payloads. This embodiment does not limit a quantity of message check codes that a MAC PDU can carry, as long as any message check code can be carried during any MAC PDU transmission, it is within the protection scope of this embodiment. The carrying manner of any message check code is similar to that of the first message check code. For example, a second message check code is calculated based on one or more other payloads (other payloads different from the first payloads). The possible carrying manner of the second message check code is similar to that of the first message check code, which is not described in detail.

In some embodiments, any first payload may carry any type of plaintext data. That is, there is no limitation on the content that the plaintext data may include.

In some embodiments, the plaintext data includes device information; the device information includes at least one of: relevant information of the first device, or relevant information of the second device; and the relevant information includes at least one of: identifier, address, location, privacy data, or model training data. By adopting this embodiment, integrity protection may be enabled only for part of first payloads including the device information, thereby reducing calculation and communication overheads.

In this embodiment, the plaintext data including the device information does not mean that the plaintext data can include only the device information, but means that the plaintext data includes at least the device information.

The relevant information of the first device may specifically be at least one of: an identifier of the first device, an address of the first device, a location of the first device, privacy data of the first device, or model training data of the first device. The relevant information of the second device may specifically be at least one of: an identifier of the second device, an address of the second device, a location of the second device, privacy data of the second device, or model training data of the second device.

The identifier of the first device may be an identity (ID) of the first device, and the ID may include but is not limited to at least one of: serial number, sequence number, name, subscription permanent identifier (SUPI), subscription concealed identifier (SUCI), permanent equipment identifier (PEI), 5G globally unique temporary identifier (5G-GUTI), internal-group identifier (IGI), generic public subscription identifier (GPSI), etc. The description of the identifier of the second device is similar to the description of the identifier of the first device, which will not be repeated.

The address of the first device may refer to a network address or a network identifier of the first device, and the network address or the network identifier of the first device may include at least one of: an Internet protocol (IP) address, a media access control (MAC) address, etc. The description of the address of the second device is similar to the description of the address of the first device, which will not be repeated.

The location of the first device may refer to at least one of a network location of the first device, a geographical location of the first device, etc. The network location of the first device may be represented by at least one of: a registration area identifier, a tracking area identity (TAI), a cell ID, or a physical cell identifier (PCI). The geographical location of the first device may be location coordinates, for example, may be expressed by longitude and latitude. The description of the location of the second device is similar to the description of the first device, which will not be repeated.

The privacy data of the first device may include at least one of: the identifier of the first device, the address of the first device, or the location of the first device. The privacy data of the second device may include at least one of: the identifier of the second device, the address of the second device, or the location of the second device.

The model training data of the first device may refer to data related to communication model training between the first device and the second device. For example, the model training data of the first device may include at least one of: an artificial intelligence (AI) data set, an AI model, a model gradient, etc. transmitted by the first device to the second device in artificial intelligence/machine learning (AIML). Accordingly, the model training data of the second device may include at least one of: an AI data set, an AI model, a model gradient, etc. transmitted by the second device to the first device in AIML.

In some possible implementation manners, before the second device transmits the first MAC PDU, the method further includes: the second device, based on an integrity protection key and the one or more first payloads, calculating the first message check code using an integrity protection algorithm.

After the first device receives the first MAC PDU, the method further includes: the first device, based on an integrity protection key and the one or more first payloads, calculating an authentication code using an integrity protection algorithm, and authenticating an integrity based on the authentication code and the first message check code.

The above embodiments describes that each first payload carries plaintext data. Correspondingly, the second device, based on the integrity protection key and the one or more first payloads, calculating the first message check code using the integrity protection algorithm may include: the second device, based on the integrity protection key and the plaintext data corresponding to each first payload, calculating the first message check code using the integrity protection algorithm. The first device, based on the integrity protection key and the one or more first payloads, calculating the authentication code using the integrity protection algorithm may include: the first device, based on the integrity protection key and the plaintext data of each first payload, calculating the authentication code using the integrity protection algorithm.

The process of the first device authenticating the integrity based on the authentication code and the first message check code may include: determining success of an integrity authentication in a case where the authentication code and the first message check code are the same; and/or determining failure of the integrity authentication in a case where the authentication code and the first message check code are different. It should be noted that the first message check code (and/or the authentication code) is used to perform integrity check or authentication on the one or more first payloads; corresponding, determining the success or failure of the integrity authentication here refers to determining success or failure of an integrity authentication of the one or more first payloads corresponding to the first message check code. Furthermore, in a case where the success of the integrity authentication is determined, the first device may receive the plaintext data corresponding to each first payload; and in a case where the failure of the integrity authentication is determined, the first device may reject receiving the plaintext data of each first payload, or perform other specified subsequent process, which will not be limited here.

For the second device, the integrity protection algorithm is predefined or determined by the second device; and/or the integrity protection key is predefined or determined by the second device. For the first device, the integrity protection algorithm is predefined or indicated by the second device; and/or the integrity protection key is predefined or indicated by the second device. Here, the term predefined may mean that it is made by default, specified by a protocol, or preconfigured.

The integrity protection algorithm may be any one of a plurality of selectable integrity protection algorithms for calculating a message check code. The integrity protection algorithm may also be alternatively called an integrity algorithm, or an integrity protection and check algorithm, etc., and all possible names are not described in detail here.

The integrity protection key may be one of: an access stratum security base key, an access stratum signaling plane integrity check key, a user plane integrity check key, a physical layer key, or a first key. That is, the access stratum security base key, the access stratum signaling plane integrity check key, the user plane integrity check key, the physical layer key, and the first key may be used as a plurality of selectable integrity protection keys. The integrity protection key ultimately used by the first device and the second device is any one of the above selectable integrity protection keys, and the first device and the second device use the same integrity protection key or use integrity protection keys that form a key pair.

The access stratum (AS) security base key may be K_{gNB} specified in the relevant protocol. This embodiment does not limit the derivation method of the key.

The access stratum signaling plane integrity check key may specifically be a radio resource control (RRC) layer integrity protection key, such as Krrcint specified in the relevant protocol. The access stratum signaling plane integrity check key may be included in a non-access stratum (NAS) security context. This embodiment does not limit the derivation method of the key. The access stratum signaling plane integrity check key may also be called an access stratum signaling plane integrity key, or may be called an access stratum signaling plane integrity protection key, etc., and all possible names are not described in detail here.

The user plane integrity check key may also be called a user plane integrity protection key, or may be called a user plane integrity protection key, or a user plane integrity protection and check key, etc., and all possible names are not described in detail here. For example, the user plane integrity check key may be expressed as K_{UPint}. The user plane integrity check key may be included in the AS security context. This embodiment does not limit the derivation method of the key.

The physical layer key may be a pair-wise key between the first device and the second device. The physical layer key may be generated based on the characteristics of the physical layer channel between the first device and the second device. This embodiment does not limit the specific generation method of the physical layer key; for example, the physical layer key may be expressed as Kphy.

The first key may also be referred to as a MAC layer integrity protection key, or a MAC layer integrity key, or a MAC layer integrity protection key. For example, the first key may be expressed as K-mac-int or Kmacint.

The first key may be a key derived from any one of the access stratum security base key, the access stratum signaling plane integrity check key, the user plane integrity check key, and the physical layer key. In the process of the second device, the method may further include one of: the second device calculating the first key based on the access stratum security base key; the second device calculating the first key based on the access stratum signaling plane integrity check key; the second device calculating the first key based on the user plane integrity check key; and the second device calculating the first key based on the physical layer key. Correspondingly, in the process of the first device, the method further includes one of: the first device calculating the first key based on the access stratum security base key; the first device calculating the first key based on the access stratum signaling plane integrity check key; the first device calculating the first key based on the user plane integrity check key; and the first device calculating the first key based on the physical layer key.

Optionally, considering the second device as an example, the second device calculating the first key based on the access stratum security base key may include: calculating the first key based on the access stratum security base key and a first parameter using a first calculation method.

The first calculation method may be configured according to actual conditions, for example, it may include at least one of: a key derivation function (KDF), a first authentication function, a second authentication function, a third key generation function (for example, it can be expressed as f3), a fourth key generation function (for example, it can be expressed as f4), a fifth key generation function (for example, it can be expressed as f5), a hash algorithm, an advanced encryption standard (AES), a snow third generation (SNOW 3G), a ZUChongzhi (ZUC), an XOR calculation, or a direct connection calculation. The first authentication function may be expressed as fl(), and the second authentication function may be expressed as f2(). The hash algorithm may be expressed as HASH(). The hash algorithm may include HMAC-SHA-256 (Hash based Message Authentication Code-Secure Hash Algorithm-256), or may adopt other hash algorithms, which will not be described in detail in this embodiment.

The first parameter may include at least one of: a first fixed value, a first algorithm type, a length of the first algorithm type, an identity of the first algorithm, a length of the identity of the first algorithm, an identifier of the first device, or an identifier of the second device.

The first fixed value may be specified by a protocol, or may be a default value, or may be preconfigured. The first fixed value may be expressed as FC, for example, FC = 0xXX.

The first algorithm may refer to an algorithm for calculating the first key, where the first key is a MAC layer integrity protection key. Correspondingly, the first algorithm may be a MAC layer integrity protection algorithm. Furthermore, the first algorithm type may be a type of the MAC layer integrity protection algorithm; the length of the first algorithm type may be expressed in a specified scale, such as hexadecimal; and the identity of the first algorithm may refer to an identity of the MAC layer integrity protection algorithm.

For example, assuming that the first key is represented by K-mac-int, and its derivation method may be the first calculation method, such as the KDF. An input key is KgNB (i.e., the access stratum security base key), and input parameters include:
the first fixed value FC = 0xXX;
P0 = algorithm type distinguisher value, where P0 in this example represents a value of the first algorithm type, that is, a value of the type of the MAC layer integrity protection algorithm; the value of the type of the MAC layer integrity protection algorithm may be predefined; for example, the value of the type of the MAC layer integrity protection algorithm may be determined based on values of various algorithm types specified by the relevant protocol (for example, see Table 1 below);
L0 = length of algorithm type distinguisher, where L0 in this example represents the length of the first algorithm type, that is, a length of the value P0 of the type of the MAC layer integrity protection algorithm;
P1 = algorithm identity (EIA-1/2/3, NIA-1/2/3), where P1 in this example represents the identity of the MAC layer integrity protection algorithm, including, for example, EIA-1/2/3 and NIA-1/2/3, where EIA1 represents LTE (or 4G) integrity protection algorithm 1 (which may be Snow 3G), EIA2 represents LTE (or 4G) integrity protection algorithm 2 (which may be AES), EIA3 represents LTE (or 4G) integrity protection algorithm 3 (which may be ZUC), NIA1 to NIA3 respectively represent NR (or 5G) integrity protection algorithm 1 to NR integrity protection algorithm 3; this is only for illustrative purposes and is not intended to limit the representation of the MAC layer integrity protection algorithm; and
L1 = length of algorithm identity, where L1 in this example represents the length of the identity of the MAC layer integrity protection algorithm, for example, it may be 0x00 or 0x01.

The values of various algorithm types specified in the relevant protocols involved in the above embodiments are further illustrated as follows with reference to Table 1.

**Table 1**

| Algorithm type distinguisher | Value |
|---|---|
| N-NAS-enc-alg (NAS encryption algorithm) | 0x01 |
| N-NAS-int-alg (NAS integrity protection algorithm) | 0x02 |
| N-MAC-int-alg (MAC layer integrity protection algorithm) | 0xYY |
| N-RRC-enc-alg (RRC layer encryption protection algorithm) | 0x03 |
| N-RRC-int-alg (RRC layer integrity protection algorithm) | 0x04 |
| N-UP-enc-alg (user plane encryption protection algorithm) | 0x05 |
| N-UP-int-alg (user plane integrity protection algorithm) | 0x06 |

Optionally, considering the second device as an example, the second device calculating the first key based on the access stratum signaling plane integrity check key may include: calculating the first key based on the access stratum signaling plane integrity check key and the first parameter using a first calculation method. The first calculation method is the same as that described in the above embodiments, which will not be described in detail. The description of the first parameter is the same as that in the above embodiments, which will not be repeated.

Optionally, considering the second device as an example, the second device calculating the first key based on the user plane integrity check key may include: calculating the first key based on the user plane integrity check key and the first parameter using the first calculation method. The first calculation method is the same as that described in the above embodiments, which will not be described in detail. The description of the first parameter is the same as that in the above embodiments, which will not be repeated.

Optionally, considering the second device as an example, the second device calculating the first key based on the physical layer key may include: calculating the first key based on the physical layer key and the first parameter using the first calculation method. The first calculation method is the same as that described in the above embodiments, which will not be described in detail. The description of the first parameter is the same as that in the above embodiments, which will not be repeated.

It should be understood that the above is only an exemplary description considering the second device calculating the first key as an example. The process of the first device calculating the first key using different keys should be the same as the process of the second device calculating the first key using different keys, which will not be repeated. It should be pointed out that since the first device and the second device should use the same algorithm and the same parameter to respectively calculate the first keys, and the first keys obtained by the two devices should theoretically be the same. This embodiment no longer distinguishes different names of the first keys of the first device and the second device. In the following description, if necessary, the first key of the first device and the first key of the second device will be used to represent the first keys generated, derived or calculated by different devices; and if the first key of the first device or the first key of the second device is not specifically mentioned in the following description, the first key may represent the first key of any device.

In some possible implementation manners, the process of the second device may further include: the second device transmitting third indication information to the first device, where the third indication information is used to indicate at least one of: an identity of an integrity protection algorithm or an identity of an integrity protection key. Correspondingly, the process of the first device may further include: the first device receiving the third indication information from the second device, where the third indication information is used to indicate at least one of: an identity of an integrity protection algorithm or an identity of an integrity protection key.

Whether the second device transmits the third indication information to the first device, and whether the second device transmits part or all of the third indication information, can be determined according to actual conditions.

In some embodiments, the second device and the first device may adopt a default integrity protection algorithm of both devices; alternatively, the second device and the first device may both adopt an integrity protection algorithm specified by a protocol. As long as the integrity protection algorithms ultimately used by the first device and the second device are the same or correspond to each other, they are within the protection scope of this embodiment. The second device and the first device may use a default integrity protection key of both devices; or, the second device and the first device may both use an integrity protection key specified by a protocol. As long as the integrity protection keys ultimately used by the first device and the second device are the same, they are within the protection scope of this embodiment. In this embodiment, the second device is not required to transmit the third indication information to the first device.

It should be pointed out that in different scenarios, the second device and the first device may use different keys as the integrity protection keys. Which integrity protection key is used in which scenario may be predefined (such as specified by the protocol or by default). As long as the integrity protection keys used by the first device and the second device are the same or form a key pair, they are within the protection scope of this embodiment. For example, the first device is an access network device and the second device is the second terminal. In a scenario, the second terminal does not have a 5G security context, and there may only be a physical layer key as a key pair between the second terminal and the access network device. In this scenario, the second terminal and the access network device may determine, by default or based on protocol regulations, to use the physical layer key directly as the integrity protection key, or may determine, by default or based on protocol regulations, to use the first key obtained from the physical layer key as the integrity protection key. In another scenario, the second terminal has a complete 5G security context; the second terminal and the access network device may determine, by default or based on protocol regulations, to use the access stratum signaling plane integrity check key or the user plane integrity check key as the integrity protection key; or the second terminal and the access network device may determine, by default or based on protocol regulations, to use the first key obtained from one of the access stratum signaling plane integrity check key and the user plane integrity check key as the integrity protection key. In some other scenarios, the second terminal has a part of 5G security context, for example, may only have a NAS security context; the second terminal and the access network device may determine, by default or based on protocol regulations, to use the access stratum signaling plane integrity check key as the integrity protection key, or may determine, by default or based on protocol regulations, to use the first key calculated from the access stratum signaling plane integrity check key as the integrity protection key. All possible scenarios and the integrity protection keys that may be used are not limited or described in detail here.

In some embodiments, the second device and the first device may use a default integrity protection key of both devices; or, the second device and the first device may both use an integrity protection key specified by the protocol. As long as the integrity protection keys ultimately used by the first device and the second device are the same, they are within the protection scope of this embodiment. The method for determining which integrity protection keys to use by the first device and the second device in different scenarios is the same as that in the above embodiments, which will not be described in detail.

The second device may determine any one of a plurality of selectable integrity protection algorithms as the integrity protection algorithm. In this case, the second device may further include: the second device transmitting third indication information to the first device, where the third indication information is used to indicate an identity of the integrity protection algorithm. Correspondingly, the first device receives the third indication information from the second device, where the third indication information is used to indicate the identity of the integrity protection algorithm. In this way, after the first device receives the third indication information, the first device may determine the integrity protection algorithm based on the identity of the integrity protection algorithm.

In some embodiments, the second device and the first device may adopt a default integrity protection algorithm of both devices; alternatively, the second device and the first device may both adopt an integrity protection algorithm specified by a protocol. As long as the integrity protection algorithms ultimately used by the first device and the second device are the same or correspond to each other, they are within the protection scope of this embodiment.

The second device may determine any one of a plurality of selectable integrity protection keys as the integrity protection key. In this case, the second device may further include: the second device transmitting third indication information to the first device, where the third indication information is used to indicate an identity of the integrity protection key. Correspondingly, the first device receives the third indication information from the second device, where the third indication information is used to indicate the identity of the integrity protection key. In this way, after the first device receives the third indication information, the first device may determine the integrity protection key based on the identity of the integrity protection key.

It should be pointed out that the second device may determine which key to use as the integrity protection key according to actual scenarios. For example, the first device is the first terminal, and the second device is the network device (specifically the access network device). In a scenario, the first terminal does not have a 5G security context, and there may be only a plurality of selectable physical layer keys between the first terminal and the access network device. In this scenario, the access network device may determine any one of the plurality of selectable physical layer keys as the integrity protection key, or may determine the first key calculated from any one of the plurality of selectable physical layer keys as the integrity protection key. In another scenario, the first terminal has a complete 5G security context, and the access network device may determine to use any one of the access stratum signaling plane integrity check key or the user plane integrity check key as the integrity protection key, or the access network device determines to use the first key obtained from any one of the access stratum signaling plane integrity check key and the user plane integrity check key as the integrity protection key. All possible scenarios and the integrity protection keys that may be used are not limited or described in detail here.

In some embodiments, the second device may determine any one of a plurality of selectable integrity protection algorithms as the integrity protection algorithm; and the second device may determine any one of a plurality of selectable integrity protection keys as the integrity protection key. In this case, the second device may further include: the second device transmitting third indication information to the first device, where the third indication information is used to indicate the identity of the integrity protection algorithm and the identity of the integrity protection key. Correspondingly, the first device receives the third indication information from the second device, where the third indication information is used to indicate the identity of the integrity protection algorithm and the identity of the integrity protection key. In this way, after the first device receives the third indication information, the first device may determine the integrity protection algorithm based on the identity of the integrity protection algorithm and determine the integrity protection key based on the identity of the integrity protection key. In this embodiment, the method of the second device determining the integrity protection key is the same as that in the above embodiments, which will not be repeated.

From the description of the above embodiments, it can be seen that whether the second device transmits the third indication information to the first device or which specific information to transmit is determined according to actual scenarios. In a case where the third indication information needs to be transmitted, the third indication information is carried by the first MAC PDU; or the third indication information is carried by the second MAC PDU, and the second MAC PDU is different from the first MAC PDU.

In some embodiments, the third indication information is carried by the first MAC PDU. That is to say, the third indication information may be carried by the first MAC PDU that is currently transmitted and carries the first MIC. That is, the second device indicates the identity of the integrity protection algorithm and/or the identity of the integrity protection key when transmitting the first MIC.

Optionally, the third indication information may be carried by any payload of the first MAC PDU, and the payload may be the same as or different from any of the above-mentioned first payloads, which are all within the protection scope of this embodiment.

Optionally, the third indication information is carried by a second MAC subheader of the first MAC PDU, and the second MAC subheader is one of the one or more MAC subheaders of the first MAC PDU. The second MAC subheader may be the same as or different from the first MAC subheader in the above embodiments, and both are within the protection scope of this embodiment. In a case where the third indication information is carried by the second MAC subheader, bits in an information field of the second MAC subheader occupied by the third indication information are not limited in this embodiment, and may be any one or more bits in any information field of the second MAC subheader, all of which are within the protection scope of this embodiment.

In some embodiments, the third indication information is carried by the second MAC PDU, and the second MAC PDU is different from the first MAC PDU. In this embodiment, a time domain range occupied by the second MAC PDU is earlier than that of the first MAC PDU. That is, the second MAC PDU may be transmitted earlier than the first MAC PDU. This embodiment does not limit whether the second MAC PDU has other functions or indicates other contents. In addition, the third indication information may be carried by any one or more payloads of the second MAC PDU, or may be carried by any one or more MAC subheaders of the second MAC PDU, all of which are within the protection scope of this embodiment and are not limited or exhaustive here.

In some possible implementation manners, each second payload of one or more second payloads of the first MAC PDU is used to carry ciphertext data, the ciphertext data carried by each second payload is calculated by the second device based on the plaintext data corresponding to the second payload, and the one or more second payloads are included in the one or more first payloads.

All or part of the one or more first payloads for calculating the first message check code in the above embodiments may further carry ciphertext data calculated from corresponding plaintext data. For convenience of description, in this embodiment, any first payload carrying ciphertext data is referred to as a second payload.

Since not all first payloads may require encryption, a quantity of second payloads may be less than or equal to the quantity of first payloads. In addition, because not all first payloads may require encryption, the first MAC PDU may further carry second indication information, where the second indication information is used to indicate the one or more second payloads. That is, the role of the second indication information is to indicate each second payload, i.e., to indicate which first payload or first payloads for calculating the first message check code have encrypted plaintext data, or which first payload or first payloads for calculating the first message check code carry ciphertext data.

In an example, the second indication information may include an identifier of each second payload of the one or more second payloads. In another example, the second indication information may include a position corresponding to each second payload; for example, a position corresponding to any second payload may be an arrangement order of the second payload among all the payloads of the first MAC PDU; for another example, the position corresponding to any second payload may be an arrangement order of the second payload among all the first payloads. It should be understood that this is only an exemplary description of the second indication information, and any indicating manner that can uniquely determine each second payload can be within the protection scope of this embodiment, which will not be described in detail.

In some examples, the first MAC subheader of the first MAC PDU further carries second indication information, and the second indication information is used to indicate the one or more second payloads. This embodiment does not limit the position of the second indication information carried by the first MAC subheader and the positional relationship between the second indication information and the first indication information. Any positional relationship between the first indication information and the second indication information that can distinguish between the first indication information and the second indication information is within the protection scope of this embodiment. In some other examples, the second indication information may be carried by any second payload of the first MAC PDU, that is, the second payload may carry the second indication information at certain designated positions, and as long as the second indication information can be distinguished from the ciphertext data carried by the second payload, it is within the protection scope of this embodiment. Alternatively, the second indication information may be carried by any payload of the first MAC PDU, that is, any payload may carry the second indication information at certain designated positions, and as long as the second indication information can be distinguished from data carried by the payload, it is within the protection scope of this embodiment. All possible carrying manners of the second indication information will not be described in detail here.

In some embodiments, there may be one first payload, and plaintext data of the first payload needs to be encrypted. That is, the first payload is a second payload in this embodiment. In this embodiment, since the first payload is the same as the second payload, that is, the payload for calculating the first message check code also carries ciphertext data, there is no need to add other indications. Alternatively, in this embodiment, second indication information may be added to indicate that a certain payload carries ciphertext data in addition to being used to calculate the first message check code.

In some embodiments, there may be a plurality of first payloads.

Optionally, the second device may only determine that plaintext data of an i-th first payload among the plurality of first payloads needs to be encrypted, and the i-th first payload is a second payload, where i is a positive integer. In this case, the first MAC PDU may carry the first indication information and the second indication information. The relevant descriptions and carrying manners of the first indication information and the second indication information are the same as those in the above embodiments, which will not be repeated.

Optionally, the second device may determine that the plaintext data of the i-th first payload and plaintext data of a j-th first payload among the plurality of first payloads need to be encrypted, and the i-th first payload and the j-th first payload are both second payloads, where j is different from i and j is a positive integer. In this case, the first MAC PDU may carry the first indication information and the second indication information. The relevant descriptions and carrying manners of the first indication information and the second indication information are the same as those in the above embodiments, which will not be repeated.

Optionally, the second device may encrypt the plaintext data of each first payload. That is, in this case, each first payload is a second payload in this embodiment. In this case, the first MAC PDU may carry the first indication information, and may or may not carry the second indication information. The relevant descriptions and carrying manners of the first indication information and the second indication information are the same as those in the above embodiments, which will not be repeated.

It should also be understood that the above embodiments describe that any first payload may carry plaintext data, and the plaintext data may be any type of data or may be plaintext data including device information. Similarly, in this implementation manner, the relevant description of the plaintext data corresponding to the second payload is the same as that in the above embodiments, which will not be repeated.

In some possible implementation manners, before the second device transmits the first MAC PDU, the method may further include: the second device encrypting the plaintext data corresponding to each second payload using an encryption algorithm and an encryption key, to obtain the ciphertext data carried by each second payload.

After the first device receives the first MAC PDU, the method further includes: the first device decrypting the ciphertext data corresponding to each second payload using the encryption algorithm and the encryption key, to obtain the plaintext data corresponding to each second payload.

An order in which the second device calculates the first message check code and performs encryption processing, and an order in which the first device authenticates the integrity based on the authentication code and the first message check code and performs decryption processing, are not limited.

In an embodiment, the one or more second payloads are part of the one or more first payloads.

Optionally, the second device may first calculate, using the integrity protection algorithm, the first message check code based on the integrity protection key and the plaintext data corresponding to each first payload, and then encrypt the plaintext data corresponding to each second payload to obtain the ciphertext data carried by each second payload. Correspondingly, the first device may decrypt the ciphertext data corresponding to each second payload using the encryption algorithm and the encryption key to obtain the plaintext data corresponding to each second payload; then, the first device calculates, using the integrity protection algorithm, the authentication code based on the integrity protection key and the plaintext data of each first payload, and authenticates the integrity based on the authentication code and the first message check code.

Since the second payload(s) are part of the first payload(s), the first device calculating, using the integrity protection algorithm, the authentication code based on the integrity protection key and the plaintext data of each first payload, may mean that: the first device calculates, using the integrity protection algorithm, the authentication code based on the integrity protection key, the plaintext data corresponding to the second payload, and the plaintext data of each first payload except the second payload(s).

Optionally, the second device may first encrypt the plaintext data corresponding to each second payload to obtain the ciphertext data carried by each second payload, and then calculate, using the integrity protection algorithm, the first message check code based on the integrity protection key, the ciphertext data carried by each second payload, and the plaintext data corresponding to each first payload except each second payload. Correspondingly, the first device may calculate, using the integrity protection algorithm, the authentication code based on the integrity protection key, the ciphertext data carried by each second payload, and the plaintext data corresponding to each first payload except each second payload, and authenticate the integrity based on the authentication code and the first message check code; in a case where the success of the integrity authentication is determined, the first device decrypts the ciphertext data corresponding to each second payload using the encryption algorithm and the encryption key to obtain the plaintext data corresponding to each second payload, and stores the plaintext data corresponding to each first payload.

In this embodiment, the process of the first device authenticating the integrity based on the authentication code and the first message check code is the same as that in the above embodiments, which will not be repeated.

In an embodiment, the one or more second payloads are all of the one or more first payloads. That is, the first payload(s) and the second payload(s) are the same.

Optionally, the second device may first calculate, using the integrity protection algorithm, the first message check code based on the integrity protection key and the plaintext data corresponding to each first payload, and then encrypt the plaintext data corresponding to each second payload to obtain the ciphertext data carried by each second payload. Correspondingly, the first device may decrypt the ciphertext data corresponding to each second payload using the encryption algorithm and the encryption key to obtain the plaintext data corresponding to each second payload; then, the first device calculates, using the integrity protection algorithm, the authentication code based on the integrity protection key and the plaintext data of each first payload, and authenticates the integrity based on the authentication code and the first message check code. Since the second payload is the same as the first payload in this embodiment, the first device calculating, using the integrity protection algorithm, the authentication code based on the integrity protection key and the plaintext data of each first payload, may mean that: the first device calculates, using the integrity protection algorithm, the authentication code based on the integrity protection key and the plaintext data corresponding to the second payload.

Optionally, the second device may first encrypt the plaintext data corresponding to each second payload to obtain the ciphertext data carried by each second payload, and then calculate, using the integrity protection algorithm, the first message check code based on the integrity protection key and the ciphertext data carried by each second payload. Correspondingly, the first device may calculate, using the integrity protection algorithm, the authentication code based on the integrity protection key and the ciphertext data carried by each second payload, and authenticate the integrity based on the authentication code and the first message check code; in a case where the success of the integrity authentication is determined, the first device decrypts the ciphertext data corresponding to each second payload using the encryption algorithm and the encryption key to obtain the plaintext data corresponding to each second payload.

In some embodiments, for the second device, the encryption algorithm is predefined or determined by the second device; and/or the encryption key is predefined or determined by the second device. For the first device, the encryption algorithm is predefined or indicated by the second device; and/or the encryption key is predefined or indicated by the second device.

The encryption algorithm may be any one of a variety of selectable encryption algorithms for encryption and/or decryption.

The encryption key is one of: an access stratum security base key, an access stratum signaling plane encryption key, a user plane encryption key, a physical layer key, and a second key. That is, the access stratum security base key, the access stratum signaling plane encryption key, the user plane encryption key, the physical layer key, and the second key may be used as a plurality of selectable encryption keys. The encryption key ultimately used by the first device and the second device is any one of the above selectable encryption keys, and the first device and the second device use the same encryption key or use encryption keys that form a key pair.

The relevant descriptions of the access stratum security base key and the physical layer ciphertext are the same as those in the above embodiments, which will not be repeated.

The access stratum signaling plane encryption key may specifically be an RRC layer encryption key, such as Krrcenc specified in the relevant protocol. The access stratum signaling plane encryption key may be included in a non-access stratum (NAS) security context. This embodiment does not limit the derivation method of the key.

The user plane encryption key may also be referred to as a user plane encryption key, for example, expressed as K_{UPenc}. The user plane encryption key may be included in the AS security context. This embodiment does not limit the derivation method of the key.

The second key may also be referred to as a MAC layer encryption key. For example, the second key may be expressed as K-mac-enc or Kmacenc.

The second key may be a key derived from any one of the access stratum security base key, the access stratum signaling plane encryption key, the user plane encryption key, and the physical layer key. In the process of the second device, the method further includes one of: the second device calculating the second key based on the access stratum security base key; the second device calculating the second key based on the access stratum signaling plane encryption key; the second device calculating the second key based on the user plane encryption key; and the second device calculating the second key based on the physical layer key. Correspondingly, in the process of the first device, the method further includes one of: the first device calculating the second key based on the access stratum security base key; the first device calculating the second key based on the access stratum signaling plane encryption key; the first device calculating the second key based on the user plane encryption key; and the first device calculating the second key based on the physical layer key.

Optionally, considering the second device as an example, the second device calculating the second key based on the access stratum security base key may include: calculating the second key based on the access stratum security base key and a second parameter using a second calculation method.

The second calculation method may be configured according to actual conditions, for example, it may include at least one of: a KDF, a first authentication function, a second authentication function, a third key generation function, a fourth key generation function, a fifth key generation function, a hash algorithm, an AES, a SNOW 3G, a ZUC, an XOR calculation, or a direct connection calculation. The second calculation method and the above first calculation method may specifically choose which algorithms or functions to use according to actual conditions. That is, the algorithms or functions specifically used by the first key and the second key in the actual process may be the same or different, which will not be limited in this embodiment.

The second parameter may include at least one of: a second fixed value, a second algorithm type, a length of the second algorithm type, an identity of the second algorithm, a length of the identity of the second algorithm, an identifier of the first device, or an identifier of the second device.

The second fixed value may be specified by a protocol, or may be a default value, or may be preconfigured. The second fixed value may be the same as or different from the first fixed value. For example, the second fixed value may be the same as the first fixed value, and both may be expressed as FC, such as FC = 0xXX.

The second algorithm may refer to an algorithm for calculating the second key, where the second key is a MAC layer encryption key. Correspondingly, the second algorithm may be a MAC layer encryption algorithm. Furthermore, the second algorithm type may be a type of the MAC layer encryption algorithm; the length of the second algorithm type may be expressed in a specified scale, such as hexadecimal; and the identity of the second algorithm may refer to an identity of the MAC layer encryption algorithm.

For example, assuming that the second key is represented by K-mac-enc, and its derivation method may be the second calculation method, such as the KDF. An input key is KgNB (i.e., the access stratum security base key), and input parameters include:
the second fixed value (may be equal to the first fixed value) FC = 0xXX;
P0 = algorithm type distinguisher value, where P0 in this example represents a value of the second algorithm type, that is, a value of the type of the MAC layer encryption algorithm; the value of the type of the MAC layer encryption algorithm may be predefined; for example, the value of the type of the MAC layer encryption algorithm may be determined based on values of various algorithm types specified by the relevant protocol (for example, see Table 2 below);
L0 = length of algorithm type distinguisher, where L0 in this example represents the length of the second algorithm type, that is, a length of the value P0 of the type of the MAC layer encryption algorithm;
P1 = algorithm (algorithm) identity (EIA-1/2/3, NIA-1/2/3), where P1 in this example represents the identity of the MAC layer encryption algorithm, including, for example, EIA-1/2/3 and NIA-1/2/3, and the description thereof is the same as that in the above embodiments and is not repeated here;
L1 = length of algorithm identity, where L1 in this example represents the length of the identity of the MAC layer encryption algorithm, for example, it may be 0x00 or 0x01.

The values of various algorithm types specified in the relevant protocols involved in the above embodiments are further illustrated as follows with reference to Table 2.

**Table 2**

| Algorithm type distinguisher | Value |
|---|---|
| N-NAS-enc-alg (NAS encryption algorithm) | 0x01 |
| N-NAS-int-alg (NAS integrity protection algorithm) | 0x02 |
| N-MAC-int-alg (MAC layer integrity protection algorithm) | 0xYY |
| N-MAC-enc-alg (MAC layer encryption algorithm) | 0xZZ |
| N-RRC-enc-alg (RRC layer encryption protection algorithm) | 0x03 |
| N-RRC-int-alg (RRC layer integrity protection algorithm) | 0x04 |
| N-UP-enc-alg (user plane encryption protection algorithm) | 0x05 |
| N-UP-int-alg (user plane integrity protection algorithm) | 0x06 |

Optionally, considering the second device as an example, the second device calculating the second key based on the access stratum signaling plane encryption key may include: calculating the second key based on the access stratum signaling plane encryption key and the second parameter using the second calculation method. The second calculation method is the same as that described in the above embodiments, which will not be repeated. The description of the second parameter is the same as that in the above embodiments, which will not be repeated.

Optionally, considering the second device as an example, the second device calculating the second key based on the user plane encryption key may include: calculating the second key based on the user plane encryption key and the second parameter using the second calculation method. The second calculation method is the same as that described in the above embodiments, which will not be repeated. The description of the second parameter is the same as that in the above embodiments, which will not be repeated.

Optionally, considering the second device as an example, the second device calculating the second key based on the physical layer key may include: calculating the second key based on the physical layer key and the second parameter using the second calculation method. The second calculation method is the same as that described in the above embodiments, which will not be repeated. The description of the second parameter is the same as that in the above embodiments, which will not be repeated.

It should be understood that the above is only an exemplary description considering the second device calculating the second key as an example. The process of the first device calculating the second key using different keys should be the same as the process of the second device calculating the second key using different keys, which will not be repeated. It should be pointed out that since the first device and the second device should use the same algorithm and the same parameter to respectively calculate the second keys, and the second keys obtained by the two devices should theoretically be the same. The two devices use the second key in corresponding manners, for example, the first device uses the second key for decryption and the second device uses the second key for encryption; therefore, this embodiment no longer distinguishes different names of the second keys of the first device and the second device. In the following description, if necessary, the second key of the first device and the second key of the second device will be used to represent the second keys generated, derived or calculated by different devices; and if the second key of the first device or the second key of the second device is not specifically mentioned in the following description, the second key may represent the second key of any device.

In some possible implementation manners, the process of the second device may further include: the second device transmitting third indication information to the first device, where the third indication information is used to indicate at least one of: an identity of an encryption algorithm or an identity of an encryption key. Correspondingly, the process of the first device may further include: the first device receiving the third indication information from the second device, where the third indication information is used to indicate at least one of: an identity of an encryption algorithm or an identity of an encryption key.

Whether the second device transmits the third indication information to the first device, and whether the second device transmits part or all of the third indication information, can be determined according to actual conditions.

In some embodiments, the second device and the first device may adopt a default encryption algorithm of both devices; alternatively, the second device and the first device may both adopt an encryption algorithm specified by a protocol. As long as the encryption algorithms ultimately used by the first device and the second device are the same or correspond to each other, they are within the protection scope of this embodiment. The second device and the first device may use a default encryption key of both devices; or, the second device and the first device may both use an encryption key specified by a protocol. As long as the encryption keys ultimately used by the first device and the second device are the same, they are within the protection scope of this embodiment. In this embodiment, the second device is not required to transmit the third indication information to the first device.

It should be pointed out that in different scenarios, the second device and the first device can use different keys as the encryption keys. The description of using which encryption key in which scenario is similar to the description of using which integrity protection key in which scenario in the above embodiments. As long as the encryption keys used by the first device and the second device are the same or form a key pair, they are within the protection scope of this embodiment, and details are not repeated here.

In some embodiments, the second device and the first device may use a default encryption key of both devices; or, the second device and the first device may both use an encryption key specified by a protocol. As long as the encryption keys ultimately used by the first device and the second device are the same, they are within the protection scope of this embodiment. The method for determining which encryption keys to use by the first device and the second device in different scenarios is the same as that in the above embodiments, which will not be described in detail.

The second device may determine any one of a plurality of selectable encryption algorithms as the encryption algorithm. In this case, the second device may further include: the second device transmitting third indication information to the first device, where the third indication information is used to indicate an identity of the encryption algorithm. Correspondingly, the first device receives the third indication information from the second device, where the third indication information is used to indicate the identity of the encryption algorithm. In this way, after the first device receives the third indication information, the first device may determine the encryption algorithm based on the identity of the encryption algorithm.

In some embodiments, the second device and the first device may adopt a default encryption algorithm of both devices; alternatively, the second device and the first device may both adopt an encryption algorithm specified by a protocol. As long as the encryption algorithms ultimately used by the first device and the second device are the same or correspond to each other, they are within the protection scope of this embodiment.

The second device may determine any one of a plurality of selectable encryption keys as the encryption key. In this case, the second device may further include: the second device transmitting third indication information to the first device, where the third indication information is used to indicate an identity of the encryption key. Correspondingly, the first device receives the third indication information from the second device, where the third indication information is used to indicate the identity of the encryption key. In this way, after the first device receives the third indication information, the first device may determine the encryption key based on the identity of the encryption key. It should be pointed out that the second device may determine which key to use as the encryption key according to actual scenarios. The detailed description is similar to the relevant description in the above embodiments that the second device may determine which key to use as the integrity protection key according to actual scenarios, and details will not be repeated.

In some embodiments, the second device may determine any one of a plurality of selectable encryption algorithms as the encryption algorithm; and the second device may determine any one of a plurality of selectable encryption keys as the encryption key. In this case, the second device may further include: the second device transmitting third indication information to the first device, where the third indication information is used to indicate the identity of the encryption algorithm and the identity of the encryption key. Correspondingly, the first device receives the third indication information from the second device, where the third indication information is used to indicate the identity of the encryption algorithm and the identity of the encryption key. In this way, after the first device receives the third indication information, the first device may determine the encryption algorithm based on the identity of the encryption algorithm and determine the encryption key based on the identity of the encryption key. In this embodiment, the manner in which the second device determines the encryption key is the same as that in the above embodiments, which will not be repeated.

From the description of the above embodiments, it can be seen that whether the second device transmits the third indication information to the first device or which specific information to transmit is determined according to actual scenarios. In a case where the third indication information needs to be transmitted, the third indication information is carried by the first MAC PDU; or the third indication information is carried by the second MAC PDU, and the second MAC PDU is different from the first MAC PDU.

Based on the solutions provided in the above embodiments, it can be seen that the third indication information may be used to indicate at least one of: an identity of an integrity protection algorithm, an identity of an integrity protection key, an identity of an encryption algorithm, or an identity of an encryption key. It should be noted that the third indication information may be transmitted multiple times, or may be transmitted only once. In a case where the third indication information may be transmitted multiple times, the types of content included in the third information in different transmissions may be different. For example, the third indication information in a transmission may only include the identity of the integrity protection key, and the third indication information in a next transmission may only include the identity of the encryption key, which will not be described in detail here. In some examples, part of the identity of the integrity protection algorithm, the identity of the integrity protection key, the identity of the encryption algorithm, and the identity of the encryption key may be default, part of the identity of the integrity protection algorithm, the identity of the integrity protection key, the identity of the encryption algorithm, and the identity of the encryption key may be determined by the second device, and none of them need to be updated; in this case, the third indication information may be transmitted only once, and the third indication information includes at least one of: the identity of the integrity protection algorithm, the identity of the integrity protection key, the identity of the encryption algorithm, or the identity of the encryption key. In some examples, part of the identity of the integrity protection algorithm, the identity of the integrity protection key, the identity of the encryption algorithm, and the identity of the encryption key may be determined by the second device and need to be updated; in this case, when the second device determines that at least one of the identity of the integrity protection algorithm, the identity of the integrity protection key, the identity of the encryption algorithm, and the identity of the encryption key needs to be updated, current third indication information may be transmitted, and the third indication information carries at least one of: an updated identity of the integrity protection algorithm, an updated identity of the integrity protection key, an updated identity of the encryption algorithm, and an updated identity of the encryption key. The manner of carrying the third indication information in each transmission is the same as that in the above embodiments, which will not be repeated.

In the above embodiments, the process in which the first device is used as a receiving end of the first MAC PDU and the process in which the second device is used as a sending end of the first MAC PDU are applicable to various possible scenarios, such as a scenario in which the first device is a first terminal and the second device is an access network device, or a scenario in which the first device is a first terminal and the second device is a second terminal, or a scenario in which the first device is an access network device and the second device is a second terminal.

In some embodiments, in a case where the first device is an access network device, it needs to be further noted that the first device includes a centralized unit (CU) and a distributed unit (DU). This embodiment does not limit a quantity of DUs. The integrity protection key and/or the encryption key may be stored in the CU.

In this embodiment, the first device receiving the first MAC PDU from the second device may mean that the DU of the first device receives the first MAC PDU from the second device.

The first device calculating, using the integrity protection algorithm, the authentication code based on the integrity protection key and the one or more first payloads, and authenticating the integrity based on the authentication code and the first message check code, includes one of:
the DU of the first device acquiring the integrity protection key from the CU, and the DU calculating, using the integrity protection algorithm, the authentication code based on the integrity protection key and the one or more first payloads, and authenticating the integrity based on the authentication code and the first message check code; and
the CU of the first device calculating, using the integrity protection algorithm, the authentication code based on the integrity protection key and the one or more first payloads and authenticating the integrity based on the authentication code and the first message check code.

Optionally, the DU of the first device acquiring the integrity protection key from the CU may be that the DU of the first device acquires the default or protocol-specified integrity protection key from the CU. Optionally, the DU of the first device may acquire the identity of the integrity protection key from the third indication information; then, the DU of the first device may transmit the identity of the integrity protection key included in the third indication information to the CU, and receive the integrity protection key transmitted by the CU. The detailed description of the integrity protection key is the same as that in the above embodiments, which will not be repeated.

The manner in which the DU of the first device determines the integrity protection algorithm may be predefined or may be obtained from the third indication information, which will not be described in detail here. It should be noted that, the third indication information, regardless how it is carried, can be received and stored by the DU of the first device. The specific processing manner of the DU calculating the authentication code and authenticating the integrity is the same as the processing of the first device authenticating the integrity in the above embodiments, which will not be repeated here.

Before the CU of the first device calculates, using the integrity protection algorithm, the authentication code based on the integrity protection key and the one or more first payloads and authenticates the integrity based on the authentication code and the first message check code, the method may further include: the DU of the first device transmitting the received first MAC PDU to the CU.

Optionally, the CU of the first device calculating, using the integrity protection algorithm, the authentication code based on the integrity protection key and the one or more first payloads, may be that: the CU of the first device acquires the default or protocol-specified integrity protection key and then calculates, using the integrity protection algorithm, the authentication code based on the integrity protection key and the one or more first payloads.

Optionally, the CU of the first device calculating, using the integrity protection algorithm, the authentication code based on the integrity protection key and the one or more first payloads, may be that: the CU of the first device may determine the integrity protection key based on the identity of the integrity protection key included in the third indication information, and calculates, using the integrity protection algorithm, the authentication code based on the integrity protection key and the one or more first payloads. The manner in which the CU obtains the integrity protection key is the same as that in the above embodiments, which will not be repeated.

The manner in which the CU of the first device determines the integrity protection algorithm may be predefined, or may be determined based on the identity of the integrity protection algorithm in the third indication information, which will not be described in detail here. It should be noted that, the third indication information, regardless how it is carried, can be received by the DU of the first device and transmitted by the DU of the first device to the CU. The specific processing manner of the CU calculating the authentication code and authenticating the integrity is the same as the manner of the first device authenticating the integrity in the above embodiments, which will not be repeated.

The first device includes a centralized unit (CU) and a distributed unit (DU), and the first device decrypting the ciphertext data corresponding to each second payload using the encryption algorithm and the encryption key to obtain the plaintext data corresponding to each second payload, includes one of:
the DU of the first device acquiring the encryption key from the CU, and the DU decrypting the ciphertext data corresponding to each second payload using the encryption algorithm and the encryption key to obtain the plaintext data corresponding to each second payload; and
the CU of the first device decrypting the ciphertext data corresponding to each second payload using the encryption algorithm and the encryption key to obtain the plaintext data corresponding to each second payload.

Optionally, the DU of the first device acquiring the encryption key from the CU may be that the DU of the first device acquires the default or protocol-specified encryption key from the CU. Optionally, the DU of the first device may acquire the identity of the encryption key from the third indication information; then, the DU of the first device may transmit the identity of the encryption key included in the third indication information to the CU, and receive the encryption key transmitted by the CU. The detailed description of the encryption key is the same as that in the above embodiments, which will not be repeated.

The manner in which the DU of the first device determines the encryption algorithm may be predefined, or may be determined based on the identity of the encryption algorithm in the third indication information, which will not be described in detail here. It should be noted that, the third indication information, regardless how it is carried, can be received and stored by the DU of the first device. The specific processing manner of the DU calculating the plaintext data corresponding to each second payload is the same as the relevant description of the first device in the above embodiments, which will not be repeated.

Before the CU of the first device decrypting the ciphertext data corresponding to each second payload using the encryption algorithm and the encryption key to obtain the plaintext data corresponding to each second payload, the method may further include: the DU of the first device transmitting the received first MAC PDU to the CU.

Optionally, the CU of the first device decrypting the ciphertext data corresponding to each second payload using the encryption algorithm and the encryption key to obtain the plaintext data corresponding to each second payload, may be that: the CU of the first device acquires the default or protocol-specified encryption key, and then decrypts the ciphertext data corresponding to each second payload using the encryption algorithm and the encryption key to obtain the plaintext data corresponding to each second payload.

Optionally, the CU of the first device decrypting the ciphertext data corresponding to each second payload using the encryption algorithm and the encryption key to obtain the plaintext data corresponding to each second payload, may be that: the CU of the first device may determine the encryption key based on the identity of the encryption key included in the third indication information, and decrypts the ciphertext data corresponding to each second payload using the encryption algorithm and the encryption key to obtain the plaintext data corresponding to each second payload.

The manner in which the CU of the first device determines the encryption algorithm may be predefined, or may be determined based on the identity of the encryption algorithm in the third indication information, which will not be described in detail here. It should be noted that, the third indication information, regardless how it is carried, can be received by the DU of the first device and transmitted by the DU of the first device to the CU.

In some possible embodiments, security processing may be performed on a packet data convergence protocol (PDCP) layer, and there is interaction between a MAC layer and the PDCP layer, to achieve the purpose of security information being included in a MAC message. For example, the second device may calculate a check code at the PDCP layer, add the check code to a payload of the MAC layer and then transmit it to the first device; and the first device may pass the check code at the MAC layer to the PDCP layer for validation. This embodiment does not limit the specific validation manner.

Next, the communication method provided in this embodiment is exemplarily described with reference to a plurality of possible examples.

In Embodiment 1, for a scenario of L1/L2 downlink message security, this embodiment mainly describes the enabling of the integrity protection mechanism for MAC CE/MAC subPDU. In this embodiment, the first device may be a first terminal, e.g., represented by a UE; and the second device may be a network device, e.g., represented by a gNB or a radio access network (RAN) node.

In this embodiment, a L1/L2 downlink message transmitted by the gNB to the UE may include content that requires security protection, so a protection mechanism established at the MAC layer is considered. In an exemplary scenario of this embodiment, during a L1/L2-triggered mobility (LTM) procedure, the UE is in an RRC connected state, and a 5G security context exists at this time. Therefore, the solution provided in this embodiment may be based on the existing 5G security context. The message transmitted by the gNB is protected as a cell switch command. The cell switch command is used to indicate switch cell information for UE. The cell switch command may be a switch command for indicating inter-base station cell switch, or a switch command for indicating intra-base station cell switch. The cell switch command may include PCIs of cells. In the exemplary scenario, the switch cell information has been provided to the UE before the LTM is performed, so the UE may only hand over to cells configured by the legitimate gNB. An attacker may tamper with target cell information in the MAC CE and direct the UE to a non-target cell, which may cause service interruption. In order to reduce computing and communication overhead, integrity protection may be enabled only for the MAC CE (i.e., the first payload in the above embodiments) corresponding to the cell switch command sent by the gNB. That is, in this embodiment, the type of the first payload is MAC CE, the plaintext data corresponding to the first payload is plaintext data including device information, and the device information may include the PCIs of the cells of the UE.

At the gNB (or RAN node) side, if integrity protection is enabled for the MAC CE (i.e., the first payload in the above embodiments) included in the MAC subPDU, the corresponding MAC subheader (i.e., the first MAC subheader in the above embodiments) includes the identity of the used integrity protection key, the identity of the integrity protection algorithm, and the MIC (i.e., the first MIC in the above embodiments).

In addition to the key identity (i.e., the identity of the integrity protection key) and the algorithm identity (i.e., the identity of the integrity protection algorithm), the MAC subPDU may further include a MAC CE identifier (i.e., the identifier of the first payload in the above embodiments). The gNB may use the RRC key Krrcint or the integrity protection key Kmacint derived from the key KgNB (i.e., the first key in the above embodiments) as the integrity protection key. In addition, if integrity protection is not enabled for the MAC CE sent by the gNB to the UE, the designated bits corresponding to the MIC (i.e., the first MIC) may all be set to 0.

At the UE side, after receiving the MAC subPDU, the UE determines the used integrity protection key based on the identity of the integrity protection key included in the MAC subPDU, generates a MIC check value based on the identity of the integrity protection algorithm, the integrity protection key and the corresponding MAC CE, and uses the MIC check value (i.e., the authentication code in the above embodiments) to compare with the MIC to authenticate the integrity of the MAC subPDU (or authenticate the integrity of the MAC CE carried by the MAC subPDU).

In Embodiment 2, for a scenario of L1/L2 downlink message security, encryption and integrity protection are enabled for the MAC CE/MAC subPDU. In this embodiment, the first device may be a first terminal, e.g., represented by a UE; and the second device may be a network device, e.g., represented by a gNB or a radio access network (RAN) node.

This embodiment aims at a scenario where the device information included in the plaintext data carried by the MAC CE (i.e., the first payload) is private information of the UE (such as UE ID and UE address). In order to prevent the attacker from linking and tracking attacks on the specific UE, the specific MAC CE may be subjected to encryption and integrity protection. The plaintext data in this embodiment may be the same as that in Embodiment 1 described above, i.e., the cell switch command.

At the RAN node (or gNB) side, for the plaintext data to be carried by the MAC CE to be sent to the UE being the cell switch command (which includes the privacy information of the UE), integrity protection is performed to generate the MIC (i.e., the first MIC in the above embodiments), where the MIC is included in the MAC subheader (i.e., the first MAC subheader in the first MAC PDU in the above embodiments); then, the plaintext data (cell switch command) to be carried by the MAC CE to be sent to the UE is encrypted for protection, and the encrypted ciphertext data after is carried by the MAC CE, so that MAC CE1 in the subPDU may be transmitted via the ciphertext.

For example, referring to FIG. 8, the MIC in FIG. 8 (i.e., the first MIC in the above embodiments) may be calculated based on plaintext data of MAC CE1 (i.e., the first payload in the above embodiments), and the MIC may be carried in the MAC header. Specifically, the MIC may be carried by MAC subheader1 corresponding to MAC CE1 in the MAC header (i.e., the first MAC subheader in the first MAC PDU in the above embodiments). FIG. 8 does not illustrate each MAC subheader included in the MAC header for the sake of simplicity. In addition, MAC CE1 in FIG. 8 carries ciphertext data calculated based on the plaintext data corresponding to MAC CE1 (that is, the first payload is also used as the second payload in the above embodiments). This embodiment enables encryption and integrity protection for MAC CE1, so the MAC subheader corresponding to MAC CE1 (that is, the first MAC subheader in the first MAC PDU in the above embodiments) may also carry the identity of the used encryption key, the identity of the integrity protection key, and algorithm identities (the identity of the integrity protection algorithm and the identity of the encryption algorithm). In addition, the MAC subheader may also carry an identifier of MAC CE1. In this embodiment, since MAC CE1 undergoes both integrity protection and encryption, only one piece of first indication information may be carried to indicate the identifier of MAC CE1.

It should also be noted that when integrity protection is not enabled, the designated bits corresponding to the MIC may all be set to 0.

In this embodiment, the description of the integrity protection key is the same as that in the above embodiments, which will not be repeated. The encryption key may use the RRC key Krrcenc, or Kmacenc derived from KgNB.

At the UE side, after receiving the MAC subPDU, the UE determines the used integrity protection key based on the identity of the integrity protection key included in the MAC subheader (i.e., the first MAC subheader in the first MAC PDU in the above embodiments), generates a MIC value (i.e., the authentication code of the above embodiments) based on the identity of the integrity protection algorithm, the integrity protection key and the corresponding MAC CE, and compares the MIC value with a MIC value included in the header to authenticate the integrity of the MAC subPDU. After receiving the MAC subPDU, the UE determines the used encryption key based on the identity of the encryption key included in the MAC subheader (i.e., the first MAC subheader in the first MAC PDU in the above embodiments), generates a keystream based on the identity of the encryption algorithm and the encryption key, and obtains the plaintext MAC CE after performing XOR on the keystream and the ciphertext.

In Embodiment 3, a L1/L2 uplink message sent by the UE to the gNB may include content that requires security protection. Therefore, it is also considered to establish a MAC layer security mechanism for such scenario. In this embodiment, the first device may be a network device. In this embodiment, the network device is represented as a RAN node for simplicity. The second device may be a second terminal. In this embodiment, the second terminal is represented as a UE for simplicity.

This embodiment describes that integrity protection is enabled for L1/L2 control signaling (such as channel state information (CSI)) reported by the UE. That is, this embodiment is for the case where the plaintext data carried by the first payload includes the location of the UE. One scenario is that the UE reports a measurement result including a PCI during the LTM procedure. Other potential application scenarios may include the UE reporting a CSI message, including sounding reference signal (SRS) or physical uplink control channel (PUCCH), or the UE reporting measurements.

For the UE in the RRC connected state, a 5G security context exists. The UE may use the existing 5G security context to enable integrity protection for the transmitted MAC PDU. Alternatively, the UE is in a RRC IDLE state, and the UE has stored a RRC integrity protection key and may directly use the key for integrity protection.

At the UE side, the method of integrity protection for the MAC PDU is the same as the method of integrity protection at the RAN node (or gNB) side in Embodiment 1, which is not repeated. For example, referring to FIG. 9, assuming that integrity protection is performed for MAC CE3 to calculate the MIC, the MIC may be carried in the MAC subheader corresponding to MAC CE3.

At the RAN node side, after receiving the L1/L2 control signaling reported by the UE, the integrity of the MAC PDU/MAC subPDU is authenticated in two manners. In the first manner, the DU sends the identity of the integrity protection key to the CU and receives the corresponding integrity protection key (Krrcint, or Kmacint derived from KgNB) sent by the CU; and the DU checks or authenticates the integrity of the MAC PDU/MAC subPDU using the corresponding integrity protection key. In the second manner, the DU sends the MAC PDU/MAC subPDU to the CU, and the CU performs integrity authentication using the security context corresponding to the UE.

In Embodiment 4, the first device in this embodiment may be a network device. In this embodiment, the network device is represented as a RAN node for simplicity. The second device may be a second terminal. In this embodiment, the second terminal is represented as a UE for simplicity. This embodiment enables encryption and integrity protection for L1/L2 control signaling (e.g., CSI information) reported by the UE.

At the UE side, the method of encryption and integrity protection for the MAC PDU is the same as the method of encryption and integrity protection at the RAN node side in Embodiment 2, which will not be repeated here. For example, referring to FIG. 9, assuming that integrity protection is performed for MAC CE3 to calculate the MIC, the MIC (that is, the first message check code in the above embodiments) may be carried in the MAC subheader corresponding to MAC CE3; and if plaintext data of MAC CE3 is encrypted, MAC CE3 carries ciphertext data. Furthermore, FIG. 9 also illustrates that in addition to the MIC, the MAC subheader corresponding to MAC CE3 may further carry an algorithm identity (i.e., the identity of the integrity protection algorithm and/or the identity of the encryption algorithm) and a key identity (i.e., the identity of the integrity protection key and/or the identity of the encryption key).

At the RAN node side, after receiving the L1/L2 control signaling reported by the UE, the integrity of the MAC PDU/MAC subPDU is authenticated in two manners. The DU sends a key identity (including the identity of the integrity protection key and/or the identity of the encryption key) to the CU, and receives the corresponding integrity protection key/encryption key (Krrcenc/Krrcint, or Kmacenc/Kmacint derived from KgNB) sent by the CU; and the DU checks or authenticates the integrity of the MAC PDU/MAC subPDU using the corresponding integrity protection key, and decrypts the MAC PDU/MAC subPDU using the encryption key after the authentication is successful. Alternatively, the DU sends the MAC PDU/MAC subPDU to the CU, and the CU performs integrity authentication and decryption using the security context corresponding to the UE.

In Embodiment 5, the first device in this embodiment may be a network device. In this embodiment, the network device is represented as a RAN node for simplicity. The second device may be a second terminal. In this embodiment, the second terminal is represented as a UE for simplicity. In this embodiment, integrity protection is enabled for L1/L2 data reported by the UE.

The applicable scenario use case of this embodiment may be a scenario for communication model training between the UE and the RAN node. The plaintext data that may be transmitted in this scenario includes: an AI data set reported by the UE in AIML, or an AI model, or a model gradient.

There are two processing manners on the UE side. In Manner 1, the MAC PDU/MAC subPDU reported by the UE is protected using a NAS security context. The UE uses the NAS security context (Krrcint) or the integrity protection key Kmacint derived from KgNB to calculate the MIC. In Manner 2, the MAC PDU/MAC subPDU reported by the UE is protected using an AS security context. The UE uses the AS security context (Kupint) or the integrity protection key Kmacint derived from KgNB to calculate MIC.

At the RAN node side, the processing manner is the same as that in Embodiment 3, which will not be repeated.

In Embodiment 6, the first device in this embodiment may be a network device. In this embodiment, the network device is represented as a RAN node for simplicity. The second device may be a second terminal. In this embodiment, the second terminal is represented as a UE for simplicity. This embodiment enables encryption and integrity protection for L1/L2 data reported by the UE. The scenario corresponding to this embodiment is the same as that of Embodiment 5, and will not be described in detail.

There are two processing manners on the UE side. In Manner 1, the MAC PDU/MAC subPDU reported by the UE is protected using NAS security contexts. The UE uses the NAS security contexts (Krrcint and Krrcenc) or keys Kmacint and Kmacenc derived from KgNB to calculate the MIC and encrypt the plaintext. In Manner 2, the MAC PDU/MAC subPDU reported by the UE is protected using AS security contexts. The UE uses the AS security contexts (Kupint and Krrcenc) or keys Kmacint and Kmacenc derived from KgNB to calculate the MIC and encrypt the plaintext data.

At the RAN node side, the processing method is the same as that in Embodiment 4, which will not be repeated.

In Embodiment 7, the physical layer key is used for the MAC layer security mechanism. In this embodiment, the first device may be a network device. In this embodiment, the network device is represented as a RAN node for simplicity. The second device may be a second terminal. In this embodiment, the second terminal is represented as a UE for simplicity.

In this embodiment, for the case where there is no 5G security context in the UE, the security protection of the message reported by the UE to the RAN node may use the physical layer key between the UE and the RAN node, i.e., extracted characteristics of the physical layer channel.

The UE uses the physical layer key Kphy to calculate the MIC and ciphertext, and sends the MAC PDU including the algorithm identities and the MIC to the RAN node. After the RAN node extracts the corresponding physical layer key, the RAN node authenticates the MIC based on the algorithm identities (that is, the identity of the integrity protection algorithm and the identity of the encryption algorithm), calculates the keystream, and decrypts the plaintext.

Here, the UE may directly use the physical layer key as the integrity protection key and the encryption key for the above processing; or, the UE may use the first key calculated based on the physical layer key as the integrity protection key and use the second key calculated based on the physical layer key as the encryption key for the above processing; or, the UE may directly use the physical layer key as the integrity protection key and use the second key calculated based on the physical layer key as the encryption key for the above processing; or, the UE may directly use the physical layer key as the encryption key and use the first key calculated based on the physical layer key as the integrity protection key for the above processing. The RAN node determines the integrity protection key and the encryption key in the same manner as the UE, which will not be repeated here.

It can be seen that through the solution provided in this embodiment, the message check code can be carried in the MAC PDU, and the message check code is calculated based on the payload in the MAC PDU. In this way, the security protection mechanism can be introduced in the MAC layer to avoid problems such as message leakage, making the message transmitted in the MAC layer more secure.

Next, the effect of the solution provided in this embodiment is described with reference to the related art.

According to the existing conclusions of R18, the MAC CE is used to carry LTM-related information, and the LTM-related information is used for triggering cell switch; permanent identities such as PCI will not be used in Layer 1 (L1) and Layer 2 (L2) signaling, instead L1 and L2 signaling will use temporary identities configured by RRC; cell switch trigger information is transmitted in a MAC CE, and the MAC CE includes at least a candidate configuration index. Cell-specific, radio bearer, and measurement configurations can be part of an LTM candidate cell configuration. That is, in the LTM, L1 measurement is used as a trigger for handover and L1/L2 messages are used for handover commands, without encryption and integrity protection.

In some discussion cases in the related art, some cases mentioned that a masked identity is used to protect a PCI. That is, when the UE reports the measurement result, a reported masked identity is used to protect the PCI. Some other cases mentioned that the CU provides cell-pair tokens generated by the PDCP layer within the MAC CE for integrity and encryption protection, and after receiving the cell-pair tokens, the UE passes the MAC layer message to the PDCP layer for validation. Still some other cases discussed the introduction of L2 security protection mechanisms and raised the above issues, but did not provide a solution.

From the above analysis, it can be seen that the cellular security in the related art is based on the protection of the PDCP layer. However, the control signaling in lower-layer transmission lacks a security protection mechanism, which may lead to privacy leakage or affect the service quality. In light of this, the solutions provided in the embodiments of the present disclosure provide a security mechanism for the MAC layer. The solution provided in this embodiment can provide encryption and integrity protection for the MAC PDU/MAC subPDU. Specifically, the solution provided in this embodiment aims at the security issue of LTM MAC CE carrying permanent identity PCI, designs an integrity protection mechanism for downlink MAC messages to prevent possible service interruption, and further provides an encryption protection for downlink MAC messages. The solution provided in this embodiment designs a variety of security mechanisms for uplink MAC messages for potential security use cases of L1/L2 uplink messages (for example, UE reporting measurement results, CSI report, AI data set report, etc.) and different security environments during transmission (for example, UE is in RRC connected state, RRC IDLE state, and there is a non-5G security context). It can be seen that by adopting the solution provided in this embodiment, the security mechanism established at the MAC layer can be applicable to different security environments and can provide a variety of security protection manners for different protection scopes.

FIG. 10 is a schematic diagram of a composition structure of a first device according to an embodiment of the present disclosure. The first device includes:
a first communication unit 1001 used to receive a first media access control (MAC) protocol data unit (PDU) from a second device, where the first MAC PDU carries a first message check code, and the first message check code is calculated by the second device based on one or more first payloads of the first MAC PDU.

The first MAC PDU includes a first MAC subheader, the first MAC subheader carries the first message check code, and the first MAC subheader is one of one or more MAC subheaders of the first MAC PDU.

The first MAC subheader further carries first indication information, and the first indication information is used to indicate each first payload of the one or more first payloads.

As shown in FIG. 10, the first device further includes: a first processing unit 1002 used to calculate an authentication code based on an integrity protection key and the one or more first payloads using an integrity protection algorithm, and authenticate integrity based on the authentication code and the first message check code.

The integrity protection algorithm is predefined or is indicated by the second device. The integrity protection key is predefined, or is indicated by the second device.

The integrity protection key is one of the following: an access stratum security base key, an access stratum signaling plane integrity check key, a user plane integrity check key, a physical layer key, and a first key.

The first processing unit is used to perform one of the following: calculating the first key based on the access stratum security base key; calculating the first key based on the access stratum signaling plane integrity check key; calculating the first key based on the user plane integrity check key; and calculating the first key based on the physical layer key.

Each first payload is used to carry plaintext data.

Each second payload of one or more second payloads of the first MAC PDU is used to carry ciphertext data, the ciphertext data carried by each second payload is calculated by the second device based on plaintext data corresponding to the second payload, and the one or more second payloads are included in the one or more first payloads.

The first MAC subheader of the first MAC PDU further carries second indication information, and the second indication information is used to indicate the one or more second payloads.

The first processing unit is used to decrypt the ciphertext data corresponding to each second payload using an encryption algorithm and an encryption key, to obtain the plaintext data corresponding to each second payload.

The encryption algorithm is predefined, or is indicated by the second device. The encryption key is predefined, or is indicated by the second device.

The encryption key is one of the following: an access stratum security base key, an access stratum signaling plane encryption key, a user plane encryption key, a physical layer key, and a second key.

The first processing unit is used to perform one of the following: calculating the second key based on the access stratum security base key; calculating the second key based on the access stratum signaling plane encryption key; calculating the second key based on the user plane encryption key; and calculating the second key based on the physical layer key.

The plaintext data includes device information, where the device information includes at least one of relevant information of the first device or relevant information of the second device, and the relevant information includes at least one of: an identifier, an address, a location, privacy data, or model training data.

The first communication unit is used to receive third indication information from the second device, where the third indication information is used to indicate at least one of: an identity of the integrity protection algorithm, an identity of the integrity protection key, an identity of the encryption algorithm, or an identity of the encryption key.

The third indication information is carried by the first MAC PDU. Alternatively, the third indication information is carried by a second MAC PDU, and the second MAC PDU is different from the first MAC PDU.

The third indication information is carried by a second MAC subheader of the first MAC PDU, and the second MAC subheader is one of the one or more MAC subheaders of the first MAC PDU.

The first processing unit includes a centralized unit (CU) and a distributed unit (DU). The DU is used to acquire the integrity protection key from the CU, calculate the authentication code based on the integrity protection key and the one or more first payloads using the integrity protection algorithm, and authenticate the integrity based on the authentication code and the first message check code. Alternatively, the CU calculates the authentication code based on the integrity protection key and the one or more first payloads using the integrity protection algorithm, and authenticates the integrity based on the authentication code and the first message check code.

The first processing unit includes a centralized unit (CU) and a distributed unit (DU). The DU is used to acquire the encryption key from the CU, and decrypt the ciphertext data corresponding to each second payload using the encryption algorithm and the encryption key, to obtain the plaintext data corresponding to each second payload. Alternatively, the CU decrypts the ciphertext data corresponding to each second payload using the encryption algorithm and the encryption key, to obtain the plaintext data corresponding to each second payload.

Each first payload of the one or more first payloads is one of the following types: a MAC service data unit (SDU), and a MAC control element (CE).

The first device is a first terminal, and the second device is one of a network device and a second terminal. The first device is a network device, and the second device is a second terminal.

FIG. 11 is a schematic diagram of a composition structure of a second device according to an embodiment of the present disclosure. The second device includes:
a second communication unit 1101 used to transmit a first media access control (MAC) protocol data unit (PDU) to a first device, where the first MAC PDU carries a first message check code, and the first message check code is calculated based on one or more first payloads of the first MAC PDU.

The first MAC PDU includes a first MAC subheader, the first MAC subheader carries the first message check code, and the first MAC subheader is one of one or more MAC subheaders of the first MAC PDU.

The first MAC subheader further carries first indication information, and the first indication information is used to indicate an identifier of each first payload of the one or more first payloads.

As shown in FIG. 11, the second device further includes: a second processing unit 1102, used to calculate the first message check code based on an integrity protection key and the one or more first payloads by adopting an integrity protection algorithm.

The integrity protection algorithm is predefined, or is determined by the second device. The integrity protection key is predefined, or is determined by the second device.

The integrity protection key is one of the following: an access stratum security base key, an access stratum signaling plane integrity check key, a user plane integrity check key, a physical layer key, and a first key.

The second processing unit is used to perform one of the following: calculating the first key based on the access stratum security base key; calculating the first key based on the access stratum signaling plane integrity check key; calculating the first key based on the user plane integrity check key; and calculating the first key based on the physical layer key.

Each first payload is used to carry plaintext data.

Each second payload of one or more second payloads of the first MAC PDU is used to carry ciphertext data, the ciphertext data carried by each second payload is calculated by the second device based on plaintext data corresponding to the second payload, and the one or more second payloads are included in the one or more first payloads.

The first MAC subheader of the first MAC PDU further carries second indication information, and the second indication information is used to indicate the one or more second payloads.

The second processing unit is used to encrypt the plaintext data corresponding to each second payload using an encryption algorithm and an encryption key, to obtain the ciphertext data carried by each second payload.

The encryption algorithm is predefined, or is determined by the second device.

The encryption key is predefined, or is determined by the second device.

The encryption key is one of the following: an access stratum security base key, an access stratum signaling plane encryption key, a user plane encryption key, a physical layer key, and a second key.

The second processing unit is used to perform one of the following: calculating the second key based on the access stratum security base key; calculating the second key based on the access stratum signaling plane encryption key; calculating the second key based on the user plane encryption key; and calculating the second key based on the physical layer key.

The plaintext data includes device information, the device information includes at least one of the following: relevant information of the first device or relevant information of the second device, and the relevant information includes at least one of the following: an identifier, an address, a location, privacy data, or model training data.

The second communication unit is used to transmit third indication information to the first device, and the third indication information is used to indicate at least one of: an identity of the integrity protection algorithm, an identity of the integrity protection key, an identity of the encryption algorithm, or an identity of the encryption key.

The third indication information is carried by the first MAC PDU. Alternatively, the third indication information is carried by a second MAC PDU, and the second MAC PDU is different from the first MAC PDU.

The third indication information is carried by a second MAC subheader of the first MAC PDU, and the second MAC subheader is one of one or more MAC subheaders of the first MAC PDU.

Each first payload of the one or more first payloads is one of the following types: a MAC service data unit (SDU), and a MAC control element (CE).

The first device is a first terminal, and the second device is one of a network device and a second terminal. Alternatively, the first device is a network device, and the second device is a second terminal.

The devices in the embodiments of the present disclosure can realize the corresponding functions of the devices in the above embodiments of the communication methods. As for processes, functions, implementation manners and beneficial effects corresponding to each module (sub-module, unit, component, or the like) in the first device or the second device, reference can be made to the corresponding description in the above method embodiments, and details will not be repeated here. It should be noted that the functions described in the each module (sub-module, unit, component, or the like) in the device in the embodiments of the present disclosure may be implemented by different modules (sub-modules, units, components, or the like) or by the same module (sub-module, unit, component, or the like).

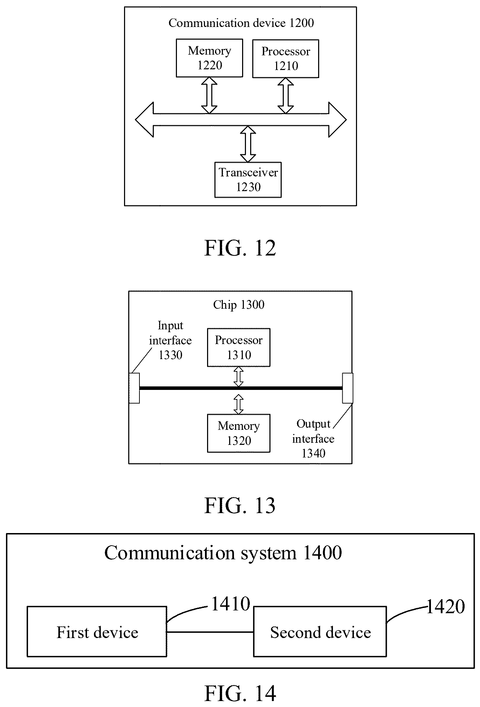

FIG. 12 is a schematic structural diagram of a communication device 1200 according to an embodiment of the present disclosure. The communication device 1200 includes a processor 1210, and the processor 1210 is capable of calling and running a computer program from a memory to cause the communication device 1200 to implement the method in the embodiments of the present disclosure.

In a possible implementation manner, the communication device 1200 may further include a memory 1220. The processor 1210 is capable of calling and running a computer program from the memory 1220 to cause the communication device 1200 to implement the method in the embodiments of the present disclosure.

The memory 1220 may be a separate device independent of the processor 1210, or may be integrated into the processor 1210.

In a possible implementation manner, the communication device 1200 may further include a transceiver 1230, and the processor 1210 is capable of controlling the transceiver 1230 to communicate with other devices, specifically, to transmit information or data to other devices, or to receive information or data transmitted by other devices.

The transceiver 1230 may include a transmitter and a receiver. The transceiver 1230 may further include antenna(s), and there may be one or more antennas.

The embodiments of the present disclosure provide a first device, including a processor, and a memory communicating with the processor. The memory is used to store instructions, and when the instructions are executed by the processor, the instructions cause the first device to perform: receiving a first media access control (MAC) protocol data unit (PDU) from a second device, where the first MAC PDU carries a first message check code, and the first message check code is calculated by the second device based on one or more first payloads of the first MAC PDU.

The first MAC PDU includes a first MAC subheader, the first MAC subheader carries the first message check code, and the first MAC subheader is one of one or more MAC subheaders of the first MAC PDU.

The first MAC subheader further carries first indication information, and the first indication information is used to indicate each first payload of the one or more first payloads.

The instructions further cause the first device to perform: calculating an authentication code based on an integrity protection key and the one or more first payloads using an integrity protection algorithm, and authenticating integrity based on the authentication code and the first message check code.

The integrity protection algorithm is predefined, or is indicated by the second device; and/or the integrity protection key is predefined, or is indicated by the second device.

The integrity protection key is one of the following: an access stratum security base key, an access stratum signaling plane integrity check key, a user plane integrity check key, a physical layer key, and a first key.

The instructions further cause the first device to perform: calculating the first key based on the access stratum security base key; calculating the first key based on the access stratum signaling plane integrity check key; calculating the first key based on the user plane integrity check key; or calculating the first key based on the physical layer key.

Each first payload is used to carry plaintext data.

Each second payload of one or more second payloads of the first MAC PDU is used to carry ciphertext data, the ciphertext data carried by each second payload is calculated by the second device based on plaintext data corresponding to the second payload, and the one or more second payloads are included in the one or more first payloads.

The first MAC subheader of the first MAC PDU further carries second indication information, and the second indication information is used to indicate the one or more second payloads.

The instructions further cause the first device to perform: decrypting the ciphertext data corresponding to each second payload using an encryption algorithm and an encryption key to obtain the plaintext data corresponding to each second payload.

The encryption algorithm is predefined, or is indicated by the second device. The encryption key is predefined, or is indicated by the second device.

The encryption key is one of the following: an access stratum security base key, an access stratum signaling plane encryption key, a user plane encryption key, a physical layer key, and a second key.

The instructions further cause the first device to perform one of the following: calculating the second key based on the access stratum security base key; calculating the second key based on the access stratum signaling plane encryption key; calculating the second key based on the user plane encryption key; and calculating the second key based on the physical layer key.

The plaintext data includes device information, the device information includes at least one of the following: relevant information of the first device or relevant information of the second device, and the relevant information includes at least one of the following: an identifier, an address, a location, privacy data, or model training data.

The instructions further cause the first device to perform: receiving third indication information from the second device, where the third indication information is used to indicate at least one of the following: an identity of the integrity protection algorithm, an identity of the integrity protection key, an identity of the encryption algorithm, or an identity of the encryption key.

The third indication information is carried by the first MAC PDU; or, the third indication information is carried by a second MAC PDU, and the second MAC PDU is different from the first MAC PDU.

The third indication information is carried by a second MAC subheader of the first MAC PDU, and the second MAC subheader is one of one or more MAC subheaders of the first MAC PDU.

Each first payload of the one or more first payloads is one of the following types: a MAC service data unit (SDU), and a MAC control element (CE).

The instructions cause the second device to perform: acquiring the integrity protection key, calculating the authentication code based on the integrity protection key and the one or more first payloads using the integrity protection algorithm, and authenticating the integrity based on the authentication code and the first message check code; or, calculating the authentication code based on the integrity protection key and the one or more first payloads using the integrity protection algorithm, and authenticating the integrity based on the authentication code and the first message check code.

The instructions cause the second device to perform: acquiring the encryption key, decrypting the ciphertext data corresponding to each second payload using the encryption algorithm and the encryption key, to obtain the plaintext data corresponding to each second payload; or, decrypting the ciphertext data corresponding to each second payload using the encryption algorithm and the encryption key, to obtain the plaintext data corresponding to each second payload.

The embodiments of the present disclosure provide a second device, including: a processor, and a memory communicating with the processor. The memory is used to store instructions, and when the instructions are executed by the processor, the instructions cause the second device to perform: transmitting a first media access control (MAC) protocol data unit (PDU) to a first device, where the first MAC PDU carries a first message check code, and the first message check code is calculated based on one or more first payloads of the first MAC PDU.

The first MAC PDU includes a first MAC subheader, the first MAC subheader carries the first message check code, and the first MAC subheader is one of one or more MAC subheaders of the first MAC PDU.

The first MAC subheader further carries first indication information, and the first indication information is used to indicate an identifier of each first payload of the one or more first payloads.

The instructions cause the second device to execute: calculating the first message check code based on an integrity protection key and the one or more first payloads using an integrity protection algorithm.

The integrity protection algorithm is predefined, or is determined by the second device. The integrity protection key is predefined, or is determined by the second device.

The integrity protection key is one of the following: an access stratum security base key, an access stratum signaling plane integrity check key, a user plane integrity check key, a physical layer key, and a first key.

The instructions cause the second device to perform one of the following: calculating the first key based on the access stratum security base key; calculating the first key based on the access stratum signaling plane integrity check key; calculating the first key based on the user plane integrity check key; and calculating the first key based on the physical layer key.

Each first payload is used to carry plaintext data.

Each second payload of one or more second payloads of the first MAC PDU is used to carry ciphertext data, and the ciphertext data carried by each second payload is calculated by the second device based on plaintext data corresponding to the second payload, and the one or more second payloads are included in the one or more first payloads.

The first MAC subheader of the first MAC PDU further carries second indication information, and the second indication information is used to indicate the one or more second payloads.

The instructions cause the second device to perform: encrypting the plaintext data corresponding to each second payload using an encryption algorithm and an encryption key to obtain the ciphertext data carried by each second payload.

The encryption algorithm is predefined, or is determined by the second device. The encryption key is predefined, or is determined by the second device.

The encryption key is one of the following: an access stratum security base key, an access stratum signaling plane encryption key, a user plane encryption key, a physical layer key, and a second key.

The instructions cause the second device to perform one of the following: calculating the second key based on the access stratum security base key; calculating the second key based on the access stratum signaling plane encryption key; calculating the second key based on the user plane encryption key; and calculating the second key based on the physical layer key.

The plaintext data includes device information, the device information includes at least one of the following: relevant information of the first device or relevant information of the second device, and the relevant information includes at least one of the following: an identifier, an address, a location, privacy data, or model training data.

The instructions cause the second device to perform: transmitting third indication information to the first device, where the third indication information is used to indicate at least one of: an identity of the integrity protection algorithm, an identity of the integrity protection key, an identity of the encryption algorithm, or an identity of the encryption key.

The third indication information is carried by the first MAC PDU; or, the third indication information is carried by a second MAC PDU, and the second MAC PDU is different from the first MAC PDU.

The third indication information is carried by a second MAC subheader of the first MAC PDU, and the second MAC subheader is one of one or more MAC subheaders of the first MAC PDU.

Each first payload of the one or more first payloads is one of the following types: a MAC service data unit (SDU), and a MAC control element (CE).

FIG. 13 is a schematic structural diagram of a chip 1300 according to embodiments of the present disclosure. The chip 1300 includes a processor 1310, and the processor 1310 is capable of calling and running a computer program from a memory to implement the method in the embodiments of the present disclosure.

In a possible implementation manner, the chip 1300 may further include a memory 1320. The processor 1310 is capable of calling and running a computer program from the memory 1320 to implement the method performed by an access network device or the method performed by a core network device in the embodiments of the present disclosure. The memory 1320 may be a separate device independent of the processor 1310, or may be integrated into the processor 1310.

In a possible implementation manner, the chip 1300 may further include an input interface 1330. The processor 1310 may control the input interface 1330 to communicate with other devices or chips, and specifically, may acquire information or data sent by other devices or chips. In a possible implementation manner, the chip 1300 may further include an output interface 1340. The processor 1310 may control the output interface 1340 to communicate with other devices or chips, and specifically, may output information or data to other devices or chips.

In a possible implementation manner, the chip may be applied to the second device in the embodiments of the present disclosure, and the chip may implement corresponding processes implemented by the second device in each method of the embodiments of the present disclosure, which will not be repeated here for the sake of brevity. In a possible implementation manner, the chip may be applied to the first device in the embodiments of the present disclosure, and the chip may implement corresponding processes implemented by the first device in each method of the embodiment of the present disclosure, which will not be repeated here for the sake of brevity.

It should be understood that the chip mentioned in the embodiments of the present disclosure may also be called a system on chip, a system chip, a chip system, or a system-on-chip chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. The general-purpose processor mentioned above may be a microprocessor or any conventional processor.

The above-mentioned memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above-mentioned memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), etc. That is, the memory in the embodiments of the present disclosure is intended to include but is not limited to these memories and any other suitable types of memories.

FIG. 14 is a schematic block diagram of a communication system 1400 according to embodiments of the present disclosure. The communication system 1400 includes a first device 1410 and a second device 1420. All or part of the above embodiments may be implemented by software, hardware, firmware or any combination thereof. When implemented using software, all or part of the embodiments may be implemented in a form of a computer program product. The computer program product includes one or more computer instructions. When loaded and executed on a computer, the computer program instructions produce, in all or in part, a process or function in accordance with the embodiments of the present disclosure. The computer may be a general purpose computer, a special purpose computer, a computer network, or any of other programmable devices. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center through wired manner (e.g., coaxial cable, optical fiber, or digital subscriber line (DSL)) or wireless (e.g., infrared, radio, or microwave) manner. The computer-readable storage medium may be any available medium to which a computer can access or may be a data storage device, such as a server or a data center that includes one or more available media. The available medium may be a magnetic medium (e.g., a floppy disk, a hard disk, or a magnetic tape), an optical medium (e.g., a digital versatile disk (DVD)), or a semiconductor medium (e.g., a solid state disk (SSD)).

It should be understood that in the various embodiments of the present disclosure, the magnitude of a serial number of each of the above processes does not imply a sequential order of execution, and that the order of execution of the processes should be determined by their function and inherent logic without constituting any limitation of the process of implementing the embodiments of the present disclosure.

Those skilled in the art will clearly understand that, for convenience and brevity of the description, as for the specific working processes of the above-described system, devices and units, reference may be made to the corresponding processes in the above method embodiments, and details will not be repeated here.

The foregoing descriptions are merely specific implementations of the present disclosure, but the protection scope of the present disclosure is not limited thereto. Any skilled person in the art could readily conceive of variations or replacements within the technical scope of the present disclosure, which shall be all included in the protection scope of the present disclosure. Therefore, the protection scope of the present disclosure shall be subject to the protection scope of claims.

## Claims

1. A communication method, comprising:
receiving, by a first device, a first media access control (MAC) protocol data unit (PDU) from a second device, wherein the first MAC PDU carries a first message check code, and the first message check code is calculated by the second device based on one or more first payloads of the first MAC PDU.

2. The method according to claim 1, wherein the first MAC PDU comprises a first MAC subheader, the first MAC subheader carries the first message check code, and the first MAC subheader is one of one or more MAC subheaders of the first MAC PDU.

3. The method according to claim 2, wherein the first MAC subheader further carries first indication information, and the first indication information is used to indicate each first payload of the one or more first payloads.

4. The method according to any one of claims 1 to 3, further comprising:
calculating, by the first device, an authentication code based on an integrity protection key and the one or more first payloads using an integrity protection algorithm, and authenticating, by the first device, integrity based on the authentication code and the first message check code.

5. The method according to claim 4, wherein the integrity protection algorithm is predefined, or is indicated by the second device.

6. The method according to claim 4 or 5, wherein the integrity protection key is predefined, or indicated by the second device.

7. The method according to any one of claims 4 to 6, wherein the integrity protection key is one of the following: an access stratum security base key, an access stratum signaling plane integrity check key, a user plane integrity check key, a physical layer key, and a first key.

8. The method according to claim 7, further comprising one of the following:
calculating, by the first device, the first key based on the access stratum security base key;
calculating, by the first device, the first key based on the access stratum signaling plane integrity check key;
calculating, by the first device, the first key based on the user plane integrity check key; and
calculating, by the first device, the first key based on the physical layer key.

9. The method according to any one of claims 1 to 8, wherein each first payload is used to carry plaintext data.

10. The method according to any one of claims 1 to 8, wherein each second payload of one or more second payloads of the first MAC PDU is used to carry ciphertext data, the ciphertext data carried by each second payload is calculated by the second device based on plaintext data corresponding to the second payload, and the one or more second payloads are comprised in the one or more first payloads.

11. The method according to claim 10, wherein the first MAC subheader of the first MAC PDU further carries second indication information, and the second indication information is used to indicate the one or more second payloads.

12. The method according to claim 10 or 11, further comprising:
decrypting, by the first device, the ciphertext data corresponding to each second payload using an encryption algorithm and an encryption key, to obtain the plaintext data corresponding to each second payload.

13. The method according to claim 12, wherein the encryption algorithm is predefined, or is indicated by the second device.

14. The method according to claim 12 or 13, wherein the encryption key is predefined, or is indicated by the second device.

15. The method according to any one of claims 12 to 14, wherein the encryption key is one of the following: an access stratum security base key, an access stratum signaling plane encryption key, a user plane encryption key, a physical layer key, and a second key.

16. The method according to claim 15, further comprising one of the following:
calculating, by the first device, the second key based on the access stratum security base key;
calculating, by the first device, the second key based on the access stratum signaling plane encryption key;
calculating, by the first device, the second key based on the user plane encryption key; and
calculating, by the first device, the second key based on the physical layer key.

17. The method according to any one of claims 9 to 16, wherein the plaintext data comprises device information, wherein the device information comprises at least one of relevant information of the first device or relevant information of the second device, and the relevant information comprises at least one of: an identifier, an address, a location, privacy data, or model training data.

18. The method according to any one of claims 5, 6, 13, and 14, further comprising:
receiving, by the first device, third indication information from the second device, wherein the third indication information is used to indicate at least one of: an identity of the integrity protection algorithm, an identity of the integrity protection key, an identity of an encryption algorithm, or an identity of an encryption key.

19. The method according to claim 18, wherein the third indication information is carried by the first MAC PDU; or, the third indication information is carried by a second MAC PDU, and the second MAC PDU is different from the first MAC PDU.

20. The method according to claim 19, wherein the third indication information is carried by a second MAC subheader of the first MAC PDU, and the second MAC subheader is one of one or more MAC subheaders of the first MAC PDU.

21. The method according to any one of claims 4 to 8, wherein the first device comprises a centralized unit (CU) and a distributed unit (DU); the calculating, by the first device, the authentication code based on the integrity protection key and the one or more first payloads using the integrity protection algorithm, and authenticating, by the first device, the integrity based on the authentication code and the first message check code, comprises one of the following:
acquiring, by the DU of the first device, the integrity protection key from the CU, calculating, by the DU, the authentication code based on the integrity protection key and the one or more first payloads using the integrity protection algorithm, and authenticating, by the DU, the integrity based on the authentication code and the first message check code; or
calculating, by the CU of the first device, the authentication code based on the integrity protection key and the one or more first payloads using the integrity protection algorithm, and authenticating, by the CU of the first device, the integrity based on the authentication code and the first message check code.

22. The method according to any one of claims 12 to 16, wherein the first device comprises a centralized unit (CU) and a distributed unit (DU); and the decrypting, by the first device, the ciphertext data corresponding to each second payload using the encryption algorithm and the encryption key, to obtain the plaintext data corresponding to each second payload, comprises one of the following:
acquiring, by the DU of the first device, the encryption key from the CU, and decrypting, by the DU, the ciphertext data corresponding to each second payload using the encryption algorithm and the encryption key, to obtain the plaintext data corresponding to each second payload; or
decrypting, by the CU of the first device, the ciphertext data corresponding to each second payload using the encryption algorithm and the encryption key, to obtain the plaintext data corresponding to each second payload.

23. The method according to any one of claims 1 to 22, wherein each first payload of the one or more first payloads is one of the following types: a MAC service data unit (SDU), and a MAC control element (CE).

24. The method according to any one of claims 1 to 20, wherein the first device is a first terminal, and the second device is one of a network device and a second terminal.

25. The method according to any one of claims 1 to 22, wherein the first device is a network device, and the second device is a second terminal.

26. A communication method, comprising:
transmitting, by a second device, a first media access control (MAC) protocol data unit (PDU) to a first device, wherein the first MAC PDU carries a first message check code, and the first message check code is calculated based on one or more first payloads of the first MAC PDU.

27. The method according to claim 26, wherein the first MAC PDU comprises a first MAC subheader, the first MAC subheader carries the first message check code, and the first MAC subheader is one of one or more MAC subheaders of the first MAC PDU.

28. The method according to claim 27, wherein the first MAC subheader further carries first indication information, and the first indication information is used to indicate an identifier of each first payload of the one or more first payloads.

29. The method according to any one of claims 26 to 28, further comprising:
calculating, by the second device, the first message check code based on an integrity protection key and the one or more first payloads using an integrity protection algorithm.

30. The method according to claim 29, wherein the integrity protection algorithm is predefined, or is determined by the second device.

31. The method according to claim 29 or 30, wherein the integrity protection key is predefined, or is determined by the second device.

32. The method according to any one of claims 29 to 31, wherein the integrity protection key is one of the following: an access stratum security base key, an access stratum signaling plane integrity check key, a user plane integrity check key, a physical layer key, and a first key.

33. The method according to claim 32, further comprising one of the following:
calculating, by the second device, the first key based on the access stratum security base key;
calculating, by the second device, the first key based on the access stratum signaling plane integrity check key;
calculating, by the second device, the first key based on the user plane integrity check key; or
calculating, by the second device, the first key based on the physical layer key.

34. The method according to any one of claims 26 to 33, wherein each first payload is used to carry plaintext data.

35. The method according to any one of claims 26 to 33, wherein each second payload of one or more second payloads of the first MAC PDU is used to carry ciphertext data, the ciphertext data carried by each second payload is calculated by the second device based on plaintext data corresponding to the second payload, and the one or more second payloads are comprised in the one or more first payloads.

36. The method according to claim 35, wherein the first MAC subheader of the first MAC PDU further carries second indication information, and the second indication information is used to indicate the one or more second payloads.

37. The method according to claim 35 or 36, further comprising:
encrypting, by the second device, the plaintext data corresponding to each second payload using an encryption algorithm and an encryption key, to obtain the ciphertext data carried by each second payload.

38. The method according to claim 37, wherein the encryption algorithm is predefined, or is determined by the second device.

39. The method according to claim 37 or 38, wherein the encryption key is predefined, or is determined by the second device.

40. The method according to any one of claims 37 to 39, wherein the encryption key is one of the following: an access stratum security base key, an access stratum signaling plane encryption key, a user plane encryption key, a physical layer key, and a second key.

41. The method according to claim 40, further comprising one of the following:
calculating, by the second device, the second key based on the access stratum security base key;
calculating, by the second device, the second key based on the access stratum signaling plane encryption key;
calculating, by the second device, the second key based on the user plane encryption key; and
calculating, by the second device, the second key based on the physical layer key.

42. The method according to any one of claims 34 to 41, wherein the plaintext data comprises device information, wherein the device information comprises at least one of relevant information of the first device or relevant information of the second device, and the relevant information comprises at least one of: an identifier, an address, a location, privacy data, or model training data.

43. The method according to any one of claims 30, 31, 38, and 39, further comprising:
transmitting, by the second device, third indication information to the first device, wherein the third indication information is used to indicate at least one of: an identity of the integrity protection algorithm, an identity of the integrity protection key, an identity of an encryption algorithm, or an identity of an encryption key.

44. The method according to claim 43, wherein the third indication information is carried by the first MAC PDU; or, the third indication information is carried by a second MAC PDU, and the second MAC PDU is different from the first MAC PDU.

45. The method according to claim 44, wherein the third indication information is carried by a second MAC subheader of the first MAC PDU, and the second MAC subheader is one of one or more MAC subheaders of the first MAC PDU.

46. The method according to any one of claims 26 to 45, wherein each first payload of the one or more first payloads is one of the following types: a MAC service data unit (SDU), and a MAC control element (CE).

47. The method according to any one of claims 26 to 46, wherein the first device is a first terminal, and the second device is one of a network device and a second terminal; or
the first device is a network device, and the second device is a second terminal.

48. A first device, comprising:
a first communication unit used to receive a first media access control (MAC) protocol data unit (PDU) from a second device, wherein the first MAC PDU carries a first message check code, and the first message check code is calculated by the second device based on one or more first payloads of the first MAC PDU.

49. The first device according to claim 48, wherein the first MAC PDU comprises a first MAC subheader, the first MAC subheader carries the first message check code, and the first MAC subheader is one of one or more MAC subheaders of the first MAC PDU.

50. The first device according to claim 49, wherein the first MAC subheader further carries first indication information, and the first indication information is used to indicate each first payload of the one or more first payloads.

51. The first device according to any one of claims 48 to 50, further comprising:
a first processing unit used to: calculate an authentication code based on an integrity protection key and the one or more first payloads using an integrity protection algorithm, and authenticate integrity based on the authentication code and the first message check code.

52. The first device according to claim 51, wherein the integrity protection algorithm is predefined, or is indicated by the second device.

53. The first device according to claim 51 or 52, wherein the integrity protection key is predefined, or indicated by the second device.

54. The first device according to any one of claims 51 to 53, wherein the integrity protection key is one of the following: an access stratum security base key, an access stratum signaling plane integrity check key, a user plane integrity check key, a physical layer key, and a first key.

55. The first device according to claim 54, wherein the first processing unit is used to perform one of the following: calculating the first key based on the access stratum security base key; calculating the first key based on the access stratum signaling plane integrity check key; calculating the first key based on the user plane integrity check key; and calculating the first key based on the physical layer key.

56. The first device according to any one of claims 48 to 55, wherein each first payload is used to carry plaintext data.

57. The first device according to any one of claims 48 to 55, wherein each second payload of one or more second payloads of the first MAC PDU is used to carry ciphertext data, the ciphertext data carried by each second payload is calculated by the second device based on plaintext data corresponding to the second payload, and the one or more second payloads are comprised in the one or more first payloads.

58. The first device according to claim 57, wherein the first MAC subheader of the first MAC PDU further carries second indication information, and the second indication information is used to indicate the one or more second payloads.

59. The first device according to claim 57 or 58, further comprising:
a first processing unit used to decrypt the ciphertext data corresponding to each second payload using an encryption algorithm and an encryption key, to obtain the plaintext data corresponding to each second payload.

60. The first device according to claim 59, wherein the encryption algorithm is predefined, or is indicated by the second device.

61. The first device according to claim 59 or 60, wherein the encryption key is predefined, or is indicated by the second device.

62. The first device according to any one of claims 59 to 61, wherein the encryption key is one of the following: an access stratum security base key, an access stratum signaling plane encryption key, a user plane encryption key, a physical layer key, and a second key.

63. The first device according to claim 62, wherein the first processing unit is used to perform one of the following: calculating the second key based on the access stratum security base key; calculating the second key based on the access stratum signaling plane encryption key; calculating the second key based on the user plane encryption key; and calculating the second key based on the physical layer key.

64. The first device according to any one of claims 56 to 63, wherein the plaintext data comprises device information, wherein the device information comprises at least one of relevant information of the first device or relevant information of the second device, and the relevant information comprises at least one of: an identifier, an address, a location, privacy data, or model training data.

65. The first device according to any one of claims 52, 53, 60, and 61, wherein the first communication unit is used to receive third indication information from the second device, wherein the third indication information is used to indicate at least one of: an identity of an integrity protection algorithm, an identity of an integrity protection key, an identity of an encryption algorithm, or an identity of an encryption key.

66. The first device according to claim 65, wherein the third indication information is carried by the first MAC PDU; or, the third indication information is carried by a second MAC PDU, and the second MAC PDU is different from the first MAC PDU.

67. The first device according to claim 66, wherein the third indication information is carried by a second MAC subheader of the first MAC PDU, and the second MAC subheader is one of one or more MAC subheaders of the first MAC PDU.

68. The first device according to any one of claims 51 to 55, wherein the first processing unit comprises a centralized unit (CU) and a distributed unit (DU), wherein
the DU is used to acquire the integrity protection key from the CU, calculate the authentication code based on the integrity protection key and the one or more first payloads using the integrity protection algorithm, and authenticate the integrity based on the authentication code and the first message check code; or
the CU calculates the authentication code based on the integrity protection key and the one or more first payloads using the integrity protection algorithm, and authenticates the integrity based on the authentication code and the first message check code.

69. The first device according to any one of claims 59 to 63, wherein the first processing unit comprises a centralized unit (CU) and a distributed unit (DU), wherein
the DU is used to acquire the encryption key from the CU, and decrypt the ciphertext data corresponding to each second payload using the encryption algorithm and the encryption key to obtain the plaintext data corresponding to each second payload; or
the CU decrypts the ciphertext data corresponding to each second payload using the encryption algorithm and the encryption key to obtain the plaintext data corresponding to each second payload.

70. The first device according to any one of claims 48 to 69, wherein each first payload of the one or more first payloads is one of the following types: a MAC service data unit (SDU), and a MAC control element (CE).

71. The first device according to any one of claims 48 to 67, wherein the first device is a first terminal, and the second device is one of a network device and a second terminal.

72. The first device according to any one of claims 48 to 69, wherein the first device is a network device, and the second device is a second terminal.

73. A second device, comprising:
a second communication unit used to transmit a first media access control (MAC) protocol data unit (PDU) to a first device, wherein the first MAC PDU carries a first message check code, and the first message check code is calculated based on one or more first payloads of the first MAC PDU.

74. The second device according to claim 73, wherein the first MAC PDU comprises a first MAC subheader, the first MAC subheader carries the first message check code, and the first MAC subheader is one of one or more MAC subheaders of the first MAC PDU.

75. The second device according to claim 74, wherein the first MAC subheader further carries first indication information, and the first indication information is used to indicate an identifier of each first payload of the one or more first payloads.

76. The second device according to any one of claims 73 to 75, further comprising:
a second processing unit used to calculate the first message check code based on an integrity protection key and the one or more first payloads using an integrity protection algorithm.

77. The second device according to claim 76, wherein the integrity protection algorithm is predefined, or is determined by the second device.

78. The second device according to claim 76 or 77, wherein the integrity protection key is predefined, or is determined by the second device.

79. The second device according to any one of claims 76 to 78, wherein the integrity protection key is one of the following: an access stratum security base key, an access stratum signaling plane integrity check key, a user plane integrity check key, a physical layer key, and a first key.

80. The second device according to claim 79, wherein the second processing unit is used to perform one of the following: calculating the first key based on the access stratum security base key; calculating the first key based on the access stratum signaling plane integrity check key; calculating the first key based on the user plane integrity check key; and calculating the first key based on the physical layer key.

81. The second device according to any one of claims 73 to 80, wherein each first payload is used to carry plaintext data.

82. The second device according to any one of claims 73 to 80, wherein each second payload of one or more second payloads of the first MAC PDU is used to carry ciphertext data, the ciphertext data carried by each second payload is calculated by the second device based on plaintext data corresponding to the second payload, and the one or more second payloads are comprised in the one or more first payloads.

83. The second device according to claim 82, wherein the first MAC subheader of the first MAC PDU further carries second indication information, and the second indication information is used to indicate the one or more second payloads.

84. The second device according to claim 82 or 83, further comprising:
a second processing unit used to encrypt the plaintext data corresponding to each second payload using an encryption algorithm and an encryption key, to obtain the ciphertext data carried by each second payload.

85. The second device according to claim 84, wherein the encryption algorithm is predefined, or is determined by the second device.

86. The second device according to claim 84 or 85, wherein the encryption key is predefined, or is determined by the second device.

87. The second device according to any one of claims 84 to 86, wherein the encryption key is one of the following: an access stratum security base key, an access stratum signaling plane encryption key, a user plane encryption key, a physical layer key, and a second key.

88. The second device according to claim 87, wherein the second processing unit is used to perform one of the following: calculating the second key based on the access stratum security base key; calculating the second key based on the access stratum signaling plane encryption key; calculating the second key based on the user plane encryption key; and calculating the second key based on the physical layer key.

89. The second device according to any one of claims 81 to 88, wherein the plaintext data comprises device information, wherein the device information comprises at least one of relevant information of the first device or relevant information of the second device, and the relevant information comprises at least one of: an identifier, an address, a location, privacy data, or model training data.

90. The second device according to any one of claims 77, 78, 85, and 86, wherein the second communication unit is used to transmit third indication information to the first device, wherein the third indication information is used to indicate at least one of: an identity of an integrity protection algorithm, an identity of an integrity protection key, an identity of an encryption algorithm, or an identity of an encryption key.

91. The second device according to claim 90, wherein the third indication information is carried by the first MAC PDU; or, the third indication information is carried by a second MAC PDU, and the second MAC PDU is different from the first MAC PDU.

92. The second device according to claim 91, wherein the third indication information is carried by a second MAC subheader of the first MAC PDU, and the second MAC subheader is one of one or more MAC subheaders of the first MAC PDU.

93. The second device according to any one of claims 73 to 92, wherein each first payload of the one or more first payloads is one of the following types: a MAC service data unit (SDU), and a MAC control element (CE).

94. The second device according to any one of claims 73 to 93, wherein the first device is a first terminal, and the second device is one of a network device and a second terminal; or, the first device is a network device, and the second device is a second terminal.

95. A first device, comprising: a processor, and a memory communicating with the processor, the memory being used to store instructions, wherein when the instructions are executed by the processor, the instructions cause the first device to perform the method according to any one of claims 1 to 25.

96. A second device, comprising: a processor, and a memory communicating with the processor, the memory being used to store instructions, wherein when the instructions are executed by the processor, the instructions cause the second device to perform the method according to any one of claims 26 to 47.

97. A chip, comprising: a processor used to call and run a computer program from a memory, causing a device equipped with the chip to perform the method according to any one of claims 1 to 25, or any one of claims 26 to 47.

98. A computer-readable storage medium, used to store a computer program which, when executed by a device, causes the device to perform the method according to any one of claims 1 to 25, or any one of claims 26 to 47.

99. A computer program product comprising computer program instructions, wherein the computer program instructions cause a computer to perform the method according to any one of claims 1 to 25, or any one of claims 26 to 47.

100. A computer program causing a computer to perform the method according to any one of claims 1 to 25, or any one of claims 26 to 47.
